(19) Europäisches Patentamt
European Patent Office
Office européen des brevets

(11) EP 4 386 019 B1

(12) EUROPEAN PATENT SPECIFICATION

(45) Date of publication and mention of the grant of the patent:
**27.05.2026 Bulletin 2026/22**

(21) Application number: **22214076.6**

(22) Date of filing: **16.12.2022**

(51) International Patent Classification (IPC):
***C08F 220/18*** *(2006.01)* ***C09D 133/08*** *(2006.01)*
***C09J 7/35*** *(2018.01)* ***C09J 133/08*** *(2006.01)*
***C09J 7/38*** *(2018.01)*

(52) Cooperative Patent Classification (CPC):
(C-Sets available)
**C08F 220/1804; C08F 220/1808; C08F 220/1811; C09D 133/08; C09J 133/08** (Cont.)

# (54) COPOLYMER AND HOT MELT MATERIALS COMPRISING SAID COPOLYMER

COPOLYMER UND HEISSSCHMELZMATERIALIEN MIT DIESEM COPOLYMER

COPOLYMÈRE ET MATÉRIAUX THERMOFUSIBLES COMPRENANT LEDIT COPOLYMÈRE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**19.06.2024 Bulletin 2024/25**

(73) Proprietor: **Henkel AG & Co. KGaA**
**40589 Düsseldorf (DE)**

(72) Inventors:
- **Arnold, Moritz**
  **41836 Hückelhoven (DE)**
- **Taden, Andreas**
  **40597 Düsseldorf (DE)**
- **Schneider, Anja**
  **40547 Düsseldorf (DE)**
- **Roschkowski, Thomas**
  **40229 Düsseldorf (DE)**

(56) References cited:
**CN-A- 108 300 332**
**US-A- 5 773 485**
**US-A1- 2006 142 408**

- **CORRALES T ET AL: "Photochemical study and photoinitiation activity of macroinitiators based on thioxanthone", POLYMER, ELSEVIER, AMSTERDAM, NL, vol. 43, no. 17, 1 August 2002 (2002-08-01), pages 4591 - 4597, XP004374513, ISSN: 0032-3861, DOI: 10.1016/S0032-3861(02) 00310-5**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 220/1804, C08F 220/06, C08F 220/382;**
**C08F 220/1804, C08F 220/06, C08F 226/06, C08F 220/382;**
**C08F 220/1808, C08F 220/06, C08F 220/34, C08F 220/382;**
**C08F 220/1808, C08F 220/06, C08F 226/06, C08F 220/382;**
**C08F 220/1811, C08F 222/02, C08F 220/606**

## Description

FIELD OF THE INVENTION

The present disclosure is directed to a copolymer which is cross-linkable under photo-irradiation, and which is derived from: ethylenically unsaturated monomers, such as monomers having (meth)acrylate functionality; and, at least one co-polymerizable photoinitiator having an ethylenically unsaturated group and a moiety that is decomposable under photo-irradiation to form a radical. The present disclosure is also directed to reactive hot melt materials comprising said copolymer. The present disclosure is still further directed to reactive hot melt pressure sensitive adhesive materials which may have utility in the production of tapes, labels and decals.

BACKGROUND TO THE INVENTION

As is known in the art, non-reactive hot melt compositions - such as non-reactive hot melt adhesive compositions - are formulated to be substantially free of water and solvents and to be solids at room temperature. The compositions are further formulated either to melt into or form a fluid state upon the application of heat: the compositions are applied to a given substrate in this fluid molten form but, after cooling, recover their solid or viscous liquid form. The phase formed after the composition has cooled is purposed with providing cohesive strength, toughness and resistance to both creep and heat. Non-reactive hot melt compositions are, however, thermoplastic and can be repeatedly heated to a fluid state and cooled to a solid or viscous liquid state.

Curable or reactive hot melt compositions are likewise solids or highly viscous liquids at room temperature and, upon application of heat, melt into a liquid or fluid state: they are applied to a substrate in this fluid molten form. Again, after cooling, the composition recovers its initial form. The phase formed after the composition has cooled - but before curing - is purposed with providing initial or wet strength. The applied composition is then cured by means of a chemical crosslinking reaction after being exposed to the requisite curing conditions. Prior to curing, the composition remains thermoplastic and can be re-melted and re-solidified but, once cured, the composition no longer has thermoplastic properties. The cross-linked composition is purposed with providing cohesive strength, toughness and resistance to both creep and heat. And generally curable hot melt compositions can provide higher strength and heat resistance than non-curable hot melt compositions.

A hot melt pressure sensitive adhesive composition is a hot melt adhesive which retains the ability to form a serviceable bond to an adherend under light pressure at room temperature. More particularly, such reactive or non-reactive adhesive compositions will demonstrate cold flow under finger pressure at room temperature.

The rapid development of wet strength through cooling of an applied hot melt composition can be important in commercial operations as it facilitates the processing of the treated substrates. However, the rapid curing of an applied reactive hot melt composition is not necessarily desirable as it can be deleterious to the workability of the applied composition. For example, moisture curing hot melt compositions may cure under ambient conditions and, immediately after application, may start to develop such strength that they may not easily be worked in production line devices which are downstream of the applicator.

It is thus evident that compositions that rapidly crosslink to provide cure strength will have a short working life. However, slowly cross-linked adhesive compositions will have a longer service life but produce less strength, delaying subsequent commercial operations. There is therefore a continual effort in the art to develop reactive hot melt compositions which possess a commercially desirable combination of wet strength, cure strength and working life.

Certain authors have focused on reactive hot melt compositions which may be cured upon photo-irradiation and, in particular, under ultraviolet light. Photocuring broadly offers flexibility as a crosslinking method since the user can determine the position and time at which photo-irradiation occurs and can moderate the exposure to that irradiation.

US Pat No. 3,661,618 (Firestone Fire and Rubber Company), for example, provides a composition comprising a polymer, such as a cellulose derivative, a polyolefin or a polyester, liquid alkyl (meth)acrylate monomer and a further reactive monomer. After application of the adhesive, the monomers are crosslinked under high energy particle radiation in the essential absence of oxygen. Problematically however, the monomeric (meth)acrylates are volatile and have an irritant effect. To obviate the disadvantages of having a significant proportion of free monomers in the photo-curable compositions, the inclusion of copolymers having pendant photoreactive groups has been developed in the art.

EP 3 252 088 A1 (Henkel AG & Co. KgaA) describes an UV-curable pressure sensitive acrylic adhesive obtainable by reacting: in a first step a mixture comprising: (i) at least one acrylic monomer of formula (I)

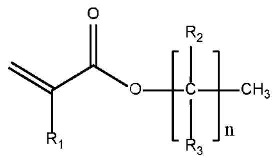

(I)

wherein: $R^1$ is H or $CH_3$; $R^2$ and $R^3$ are both H or both $CH_3$; and, n is an integer from 0 to 22; and (ii) at least one monomer which comprises a pendant reactive functional group selected from cycloaliphatic epoxides, oxetanes, mono-substituted oxiranes or mixtures thereof; and, in a second step, reacting the obtained mixture from the first step with: (iii) at least one cationic photoinitiator; and, (iv) optionally further additives.

EP2960258 A1 (Henkel AG & Co. KgaA) discloses a method for the production of a UV-curable acrylic copolymer, said method comprising: (a) polymerizing a mixture of monomers to form an acrylic copolymer, the monomer mixture comprising, based on the weight of said mixture: (i) 40-95 wt.% of at least one (meth)acrylate monomer; (ii) 5-60 wt.% of at least one co-polymerizable monomer, wherein said monomer is selected from those whose homopolymers have a glass transition temperature of higher than -30°C, and, iii) optionally 0.5-20 wt.% of at least one co-polymerizable functional monomer having a functional group selected from the group consisting of a hydroxyl group and a carboxyl group; and, (b) reacting the acrylic copolymer with at least one type of monomer comprising a UV-curable functional group in the presence of a catalyst to form the UV-curable acrylic copolymer, wherein said monomers comprising a UV-curable group are monomers that comprise a vinyl and an epoxy group, preferably epoxy-functionalized acrylates and more preferably glycidyl esters of (meth)acrylic acid.

WO2021/225778 A1 (Henkel IP and Holding GmbH) describes a photo-crosslinker which is responsive to ultraviolet light having a wavelength of 365 nm or higher, said photo-crosslinker having a structure as defined in Formula (I) below:

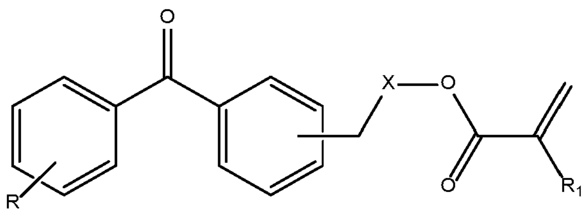

(I)

wherein:

R is H, $C_1$ to $C_{30}$ alkyl, $C_1$ to $C_{30}$ alkoxy, $C_1$ to $C_{30}$ acyloxy, $C_3$ to $C_{30}$ aryloxy, halogen or $C_1$ to $C_{30}$ thioether;

$R^1$ is H or $CH_3$; and,

X is optional, when X is not present R is not H.

Further is disclosed a hot melt pressure sensitive adhesive comprising a (meth)acrylate polymer having incorporated therein the photo-crosslinker according to Formula (I).

EP 1 469 036 B1 (Collano AG) describes a composition comprising a meltable, UV-crosslinkable polyacrylate, wherein the composition comprises an oligomeric compound having UV-crosslinkable functional groups which are reactive with the polyacrylate. The UV-crosslinkable polyacrylate is obtained by co-polymerization of a functional monomer of the formula:

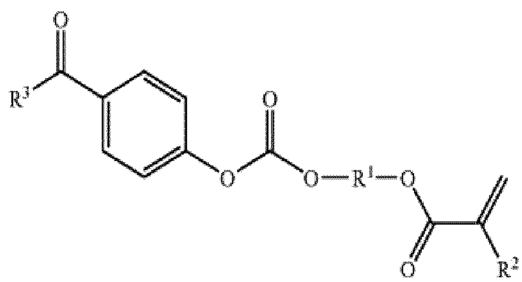

wherein: $R^1$ is an alkylene group; $R^2$ is a hydrogen atom or a methyl group; and, $R^3$ is an unsubstituted or substituted $C_1$-$C_4$ alkyl group or phenyl group.

EP-A-0 017 364 (Rohm & Haas) describes copolymers which may be used in *inter alia* adhesives and sealants, which copolymers comprise from 0.1 to 10 wt.% by weight of allylbenzoyl benzoate as a co-polymerized photoinitiator. Although these materials can be crosslinked using UV radiation, it is considered that their reactivity towards such radiation is too low, leading to low curing efficiency particularly at deeper point in layers of the material. Moreover, layers produced from the copolymers are not considered sufficiently tacky for certain adhesive applications.

The low reactivity and inefficiency of crosslinking copolymers comprising from 0.01 to 5 wt.% of co-polymerizable 2-alkoxy-2-phenyl-2-benzoylethyl acrylate is also considered a disadvantage of the teaching of US Patent No. 4,144,157 (Beiersdorf AG). US 2006/142408 A1 discloses a UV curable hot melt pressure sensitive adhesive comprising an acrylic polymer which comprises a polymerisable photoinitiator.

In practice, the low curing efficiency of copolymers comprising co-polymerizable photoinitiators might be moderated by using hot melt compositions at lower coating weights or by increasing the dosage of the applied irradiation. Furthermore, low curing efficiency has contributed, unfortunately, to the sustained use of mercury-based UV systems for the photo-irradiation of cross-linking polymers: mercury lamps provide a broad band spectral distribution such that shorter wavelength light promotes surface cure of the applied compositions, whilst longer wavelength light effects deeper cure.

These solutions may not however be desirable or, indeed, viable in certain applications. In particular, following the 2013 Minamata Convention on Mercury, the manufacture, import or export of mercury lamps became illegal in January 2020. There is therefore a need in the art to develop copolymers comprising co-polymerizable photoinitiators which are responsive to alternative sources of UV-irradiation to mercury lamps, at both practicable coating weights and dosages of the applied irradiation. It would certainly be advantageous to develop copolymers comprising co-polymerizable photoinitiators which can be cured using UV Light Emitting Diodes (UV-LEDs) given that such systems present the advantages of *inter alia*: small size; lack of fragility; temperature-independent output; and, the absence of lead or warm-up time.

STATEMENT OF THE INVENTION

In accordance with a first aspect of the present disclosure, there is provided a copolymer obtained by free radical polymerization, said copolymer comprising, based on the total weight of monomers:

from 0.1 to 10 wt.% of a) at least one co-polymerizable photoinitiator in accordance with Formula (I):

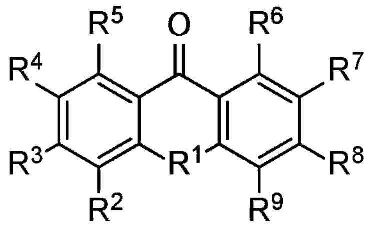

(I)

wherein:

$R^1$ is NH, $CH_2$, S or O;

$R^2$ to $R^9$ are independently selected from H, OH, SH, halide, CN, $C_1$-$C_6$ alkyl, $C_1$-$C_6$ alkoxy, $C_1$-$C_{12}$ alkoxylalkyl, COOH, $SR^{10}$, $COOR^{10}$, $N(R^{10})_2$ or $N(R^{10})_3Q$;

each $R^{10}$ is independently selected from $C_1$-$C_6$ alkyl or $C_6$-$C_{18}$ aryl; and,

Q is halide, acetate, phosphate, sulphate or nitrate,

subject to the proviso that j of the radicals $R^2$ to $R^9$ are a radical selected from

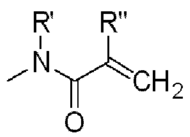 , 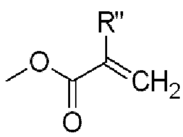 , 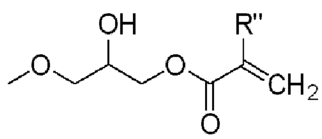 ,

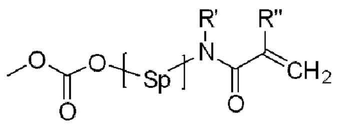 , 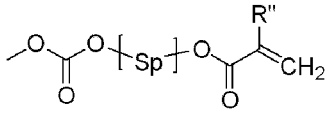 or, 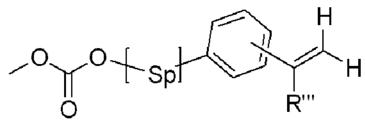

wherein:

j is an integer of from 1 to 3, preferably 1 or 2;

each R' is independently selected from H, $C_1$-$C_4$ alkyl or $C_6$-$C_{18}$ aryl;

R" is H or $C_1$ alkyl;

R'" is H or $C_1$ alkyl; and,

Sp denotes a spacer group of the following type:

$$-[-\{(X)_k-Y\}_l-(X)_m-]- \text{ or } -[-\{(X)_k-Y\}_l-\{(X)_m-Y\}_n]-$$

wherein:

k is an integer of from 1 to 10;

l is an integer of from 0 to 25;

m is an integer of from 1 to 10;

n is an integer of from 0 to 25;

each X is independently selected from $C_2$-$C_{12}$ alkylene, $C_3$-$C_{18}$ cycloalkylene or $C_6$-$C_{18}$ arylene; and,

each Y is a divalent radical independently selected from the group consisting of:

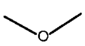 , 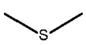 , 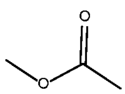 , 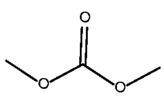 , 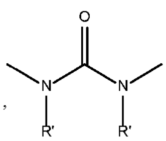 , 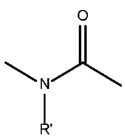 , 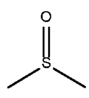 and 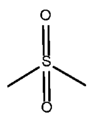

and, from 90 to 99.9 wt.% of b) at least one ethylenically unsaturated non-ionic monomer which does not bear an epoxide group or a moiety decomposable under photo-irradiation to form a radical, , wherein part b) comprises from 0.1 to 2 wt.%, based on the total weight of monomers, of b) vinyl methyl oxazolidinone (VMOX).

In an important embodiment, the copolymer comprises, based on the total weight of monomers:

from 0.1 to 5 wt.%, preferably from 0.1 to 2 wt.% of part a) said at least one co-polymerizable photoinitiator in accordance with Formula (I); and,
from 95 to 99.9 wt.%, preferably from 98 to 99.9 wt.% of part b) said at least one ethylenically unsaturated non-ionic monomer which does not bear an epoxide group or a moiety decomposable by photo-irradiation to form a radical.

The or each co-polymerizable photoinitiator in accordance with Formula (I) which is incorporated into the copolymer in part a) thereof may be characterised in that:

$R^1$ is NH, S or O, for example $R^1$ is S; and / or,
$R^2$ to $R^9$ are independently selected from H, OH, $C_1$-$C_4$ alkyl, $C_1$-$C_4$ alkoxy or $C_1$-$C_8$ alkoxyalkyl, or, preferably, in that $R^2$ to $R^9$ are independently selected from H or $C_1$-$C_4$ alkyl; and / or,
each R' is independently selected from H, $C_1$-$C_4$ alkyl or $C_6$ aryl.

In a particular embodiment, part a) comprises at least one monomer selected from the group consisting of: 9-oxo-3-(propan-2-yl)-9H-thioxanthen-2-yl propen-2-oate; and, N-ethyl-N-[(9-oxo-9H-thioxanthen-3-yl) methyl]prop-2-enamide.

In certain embodiments, part b) of the copolymer may comprise both hard and soft ethylenically unsaturated monomers. More particularly, the copolymer may comprise, based on the total weight of said part b): from 80 to 99 wt.%, of bs) at least one ethylenically unsaturated monomer which, if homopolymerized, would yield a homopolymer having a glass transition temperature (Tg) of less than 25°C or preferably less than 20°C; and, from 1 to 20 wt.% of bh) at least one ethylenically unsaturated monomer which, if homopolymerized would yield a homopolymer having a glass transition temperature (Tg) of greater than 25°C or preferably greater than 30°C.

Given that the photo-initiator is incorporated within the copolymer backbone, deleterious migration of the photo-initiator is precluded. Further, copolymers in accordance with the above recital demonstrate curability or crosslinking under UV irradiation of LED lights or arrays thereof. Such crosslinking can be effected at low dosages of irradiation and thereby at low energy consumption. Moreover, there may be a reversible color change during the crosslinking of the copolymer which provides a facile, observable way of verifying the crosslinking reaction.

The efficiency of the crosslinking of the recited copolymer is further improved by amine synergists. Thus, in an embodiment, part b) of the copolymer comprises from 0.1 to 5 wt.%, preferably from 0.1 to 2 wt.%, based on the total weight of monomers, of b) iv) at least one tertiary amino (meth)acrylate. In the present invention, part b) of the copolymer comprises from 0.1 to 2 wt.%, based on the total weight of monomers, of b) vinyl methyl oxazolidinone (VMOX).

In accordance with a second aspect of the present disclosure, there is provided a material which is crosslinkable under photoirradiation, said material comprising or consisting of the copolymer as defined herein above and in the appended claims.

The disclosure further provides a reactive hot melt composition which is crosslinkable under photoirradiation, said composition comprising, based on the weight of the composition: from 20 to 100 wt.% of i) at least one copolymer as defined herein above and in the appended claims; from 0 to 60 wt.% of ii) at least one tackifying resin; and, from 0 to 20 wt.% of iii) wax.

Coatings, adhesives or sealants obtained by the crosslinking under photoirradiation of the reactive hot melt material as defined herein above are considered a further aspect of the present disclosure. Hot melt pressure sensitive adhesive (HMPSA) materials are an important embodiment of this aspect.

The disclosure still further provides an article (A) comprising a curable film of the hot melt materials as defined above, said film being disposed on a release liner and / or a carrier substrate. The article (A) may be a label, a single-sided tape, a transfer tape or a double-sided tape.

DEFINITIONS

As used herein, the singular forms "*a*", "*an*" and "*the*" include plural referents unless the context clearly dictates otherwise.

The terms "*comprising*", "*comprises*" and "*comprised of*" as used herein are synonymous with "*including*", "*includes*", "*containing*" or "*contains*", and are inclusive or open-ended and do not exclude additional, non-recited members, elements or method steps.

As used herein, the term "*consisting of*" excludes any element, ingredient, member or method step not specified. For completeness, the term "*comprising*" encompasses "*consisting of*".

The words "*preferred*", "*preferably*", "*desirably*" and "*particularly*" are used frequently herein to refer to embodiments of the disclosure that may afford particular benefits, under certain circumstances. However, the recitation of one or more preferable, preferred, desirable or particular embodiments does not imply that other embodiments are not useful and is not intended to exclude those other embodiments from the scope of the disclosure.

The word "*exemplary*" is used herein to mean serving as an example, instance, or illustration. Any aspect or design described herein as "*exemplary*" is not necessarily to be construed as preferred or advantageous over other aspects or designs. Rather, use of the word exemplary is intended to present concepts in a concrete fashion.

As used throughout this application, the word "*may*" is used in a permissive sense - that is meaning to have the potential to - rather than in the mandatory sense.

When amounts, concentrations, dimensions and other parameters are expressed in the form of a range, a preferable range, an upper limit value, a lower limit value or preferable upper and limit values, it should be understood that any ranges obtainable by combining any upper limit or preferable value with any lower limit or preferable value are also specifically disclosed, irrespective of whether the obtained ranges are clearly mentioned in the context.

Further, in accordance with standard understanding, a weight range represented as being "*from 0 to* x" specifically includes 0 wt.%: the ingredient or part - a) or b) herein, for example - defined by said range may be absent from the material or may be present in the material in an amount up to x wt.%.

The term "*based on the total weight of monomers*" refers to the total monomers of the copolymer. Weight ratios

based on the weight of monomers in either part a) or part b) of the copolymer will be specifically identified where applicable.

As used herein, room temperature is 23°C plus or minus 2°C.

The molecular weights referred to in this specification can be measured with gel permeation chromatography (GPC) using polystyrene calibration standards, such as is done according to ASTM 3536.

As used herein, the term softening point (°C.) used in regard to waxes and tackifying resins herein is the Ring & Ball softening point, which is measured unless otherwise indicated according to ASTM E28.

Where mentioned, a calculated glass transition temperature ("$T_g$") of a polymer or co-polymer is that temperature which may be calculated by using the Fox equation:

$$1/T_{g,polymer} \approx \sum_i w_i / T_{g,i}$$

where: $T_{g,polymer}$ and $T_{g,i}$ are the glass transition temperature of the (co-)polymer and of the component monomers (i) respectively; and, $w_i$ is the mass fraction of component i. The glass transition temperatures of certain homo-polymers may be found in the published literature.

The actual glass transition temperature ($T_g$) of a (co-)polymer can be determined by differential scanning calorimetry (DSC) according to the methodology of Deutsches Institut für Normung (DIN) 11357.

Viscosities of the materials described herein are, unless otherwise stipulated, measured using the Brookfield DVII Viscometer, using Spindle 27 at the stated temperature and 50% Relative Humidity (RH). The viscometer is calibrated one time a year and checked by services. The calibration is done using standard liquids of known viscosity from 1 to 50,000 cps (parallel plate PP20 and at shear rate 1 $s^{-1}$ at 23°C). Measurements of the materials according to the present invention are done using the parallel plate PP20 at different shear rates from 1.5 to 100 $s^{-1}$.

As used in the art, the term "*pressure-sensitive adhesive*" refers to adhesive materials that have: (1) persistent tack; (2) adherence with no more than finger pressure; (3) sufficient ability to hold onto an adherend; and, (4) sufficient cohesive strength to be cleanly removable from the adherend.

The term "*hot-melt*" as used herein describes a material that is substantially non-flowable at room temperature, but converts to a flowable state at an elevated, application temperature of, for example, from 100° to 180°C. The materials of the present invention do, however, demonstrate "*cold flow*" which herein refers to the distortion or viscous flow of the material at room temperature under applied pressure, especially finger pressure. The materials does not exhibit a liquid to solid transition and generally do not return to their original dimensions when the pressure is removed.

As used herein, the term "*release liner*" refers to a thin flexible sheet which, after being placed in intimate contact with a pressure-sensitive adhesive surface may be subsequently removed without damaging the adhesive coating. Illustrative materials of which the release liner may comprise or consists include: silicones; polyethylene; polypropylene; polyesters, such as polyethylene terephthalate (PET) and polybutylene terephthalate (PBT); cellulose acetate; polyvinylchloride; polyvinylidene fluoride; and, paper substrates coated or laminated with the aforementioned thermoplastics. For completeness, the coated papers or thermoplastic materials are often siliconized or otherwise treated with a release agent to impart improved release characteristics.

As is known in the art, release liners are typically left in place for storage and transport and only removed when a bonding operation is to be performed. The release liners thereby perform a number of functions, including preventing contamination of the material, facilitating handling thereof, providing support thereto and providing for the conveyance of information or identifying data.

As used herein, the term "*carrier*" refers to a material onto which a curable film of a hot melt pressure sensitive adhesive material can be coated so as to stabilize the film. The carrier can add thickness to the article so as to improve handling. The carrier substrate differs from a release liner in that it cannot be removed from the curable film without deleteriously effecting the integrity of the curable film. The carrier may be flexible and may conventionally be selected from polymeric films, metal foils, foams, cloths, and combinations thereof. For example, the carrier substrate may be selected from the group consisting of polyester, polypropylene, polyethylene, foam and paper.

As used herein, the term "*transfer coating*" refers to a layer or film of pressure-sensitive adhesive, which is not supported by a backing.

As used herein, the term "*application temperature*" will refer to the temperature at which the viscosity of the material is such it will be substantially fluid and can be deposited as a fluid onto a substrate by contact or non-contact techniques.

As used herein, the term "*free radical initiator*" refers to any chemical species which, upon exposure to sufficient energy - in the form of light or heat, for example - decomposes into two parts which are uncharged, but which each possess at least one unpaired electron. Thus a thermal free radical initiator generates free upon exposure to heat. And known thermal free radical initiators include, but are not limited to, peroxide compounds, azo compounds and persulfate compounds.

The term "*photoinitiator*" as used herein denotes a compound which can be activated by an energy-carrying activation beam - such as electromagnetic radiation - upon irradiation therewith. Specifically, a "*free-radical photoinitiator*"

herein refers to a photoactive compound that generates free radicals, which radicals could herein initiate polymerization or reaction by addition to C=C double bonds present in the compositions. Such free-radical photoinitiators are conventionally categorized into Norrish type I and Norrish type II photoinitiators. A Norrish type I radical photoinitiator undergoes the Norrish type I reaction when exposed to actinic radiation: said reaction is defined by IUPAC as $\alpha$-cleavage of an excited carbonyl compound leading to an acyl-alkyl radical pair (from an acyclic carbonyl compound) or an acyl-alkyl biradical (from a cyclic carbonyl compound) as a primary photoproduct. A Norrish type II radical photoinitiator undergoes the Norrish type II reaction when exposed to actinic radiation: that reaction is defined by IUPAC as the photochemical abstraction of a $\gamma$-hydrogen by an excited carbonyl compound to produce a 1,4-biradical as a primary photoproduct.

As used herein, the term "*monomer*" refers to a substance that can undergo a polymerization reaction to contribute constitutional units to the chemical structure of a polymer. The term "*monofunctional*" as used herein, refers to the possession of one polymerizable moiety. The term "*polyfunctional*", as used herein, refers to the possession of more than one polymerizable moiety.

As used herein "*solvents*" are substances capable of dissolving another substance to form a uniform solution; during dissolution neither the solvent nor the dissolved substance undergoes a chemical change. Solvents may either be polar or non-polar.

As used herein, the term "*equivalent (eq.")* relates, as is usual in chemical notation, to the relative number of reactive groups present in the reaction.

The term "*equivalent weight*" as used herein refers to the molecular weight divided by the number of a function concerned. As such, "*epoxide equivalent weight*" (EEW) means the weight of resin, in grams, that contains one equivalent of epoxide.

As used herein, the term "*epoxide*" denotes a compound characterized by the presence of at least one cyclic ether group, namely one wherein an ether oxygen atom is attached to two adjacent carbon atoms thereby forming a cyclic structure. The term is intended to encompass monoepoxide compounds, polyepoxide compounds (having two or more epoxide groups) and epoxide terminated prepolymers. The term "*monoepoxide compound*" is meant to denote epoxide compounds having one epoxy group. The term "*polyepoxide compound*" is meant to denote epoxide compounds having at least two epoxy groups. The term "*diepoxide compound*" is meant to denote epoxide compounds having two epoxy groups.

The epoxide may be unsubstituted but may also be inertly substituted. Exemplary inert substituents include chlorine, bromine, fluorine and phenyl.

As used herein, "*(meth)acryl*" is a shorthand term referring to "*acryl*" and/or "*methacr*yl". Thus, the term "*(meth) acrylamide*" refers collectively to acrylamide and methacrylamide.

As used herein, "$C_1$-$C_n$ *alkyl*" group refers to a monovalent group that contains 1 to n carbons atoms, that is a radical of an alkane and includes straight-chain and branched organic groups. As such, a "$C_1$-$C_{18}$ *alkyl*" group refers to a monovalent group that contains from 1 to 18 carbons atoms, that is a radical of an alkane and includes straight-chain and branched organic groups. In general, a preference for alkyl groups containing from 1-12 carbon atoms ($C_1$-$C_{12}$ alkyl) - for example alkyl groups containing from 1 to 8 carbon atoms ($C_1$-$C_8$ alkyl) - should be noted. Examples of alkyl groups include, but are not limited to: methyl; ethyl; propyl; isopropyl; n-butyl; isobutyl; sec-butyl; tert-butyl; n-pentyl; n-hexyl; n-heptyl; and, 2-ethylhexyl. In the present invention, such alkyl groups may be unsubstituted or may be substituted with one or more halogen. Where applicable for a given moiety (R), a tolerance for one or more non-halogen substituents within an alkyl group will be noted in the specification.

The term "$C_1$-$C_{18}$ *hydroxyalkyl*" as used herein refers to a HO-(alkyl) group having from 1 to 18 carbon atoms, where the point of attachment of the substituent is through the oxygen-atom and the alkyl group is as defined above.

An "*alkoxy group*" refers to a monovalent group represented by -OA where A is an alkyl group: nonlimiting examples thereof are a methoxy group, an ethoxy group and an iso-propyloxy group. The term "$C_1$-$C_{12}$ *alkoxyalkyl*" as used herein refers to an alkyl group having an alkoxy substituent as defined above and wherein the moiety (alkyl-O-alkyl) comprises in total from 1 to 12 carbon atoms: such groups include methoxymethyl ($-CH_2OCH_3$), 2-methoxyethyl ($-CH_2CH_2OCH_3$) and 2-ethoxyethyl. Analogously, the term "$C_7$-$C_{18}$ alkoxyaryl" as used herein refers to an aryl group having an alkoxy substituent as defined above and wherein the moiety (aryl-O-alkyl) has in total from 7 to 18 carbon atoms.

The term "$C_2$-$C_{12}$ *alkylene*" as used herein, is defined as saturated, divalent hydrocarbon radical having from 2 to 12 carbon atoms. In general in the present disclosure, such alkylene groups may be unsubstituted or may be substituted with one or more halogen. Specifically within monomers of Formula (I) hereinbelow, such alkylene groups (X) may optionally be substituted by one or more group selected from halogen, OH or COOH.

The term "$C_3$-$C_{18}$ *cycloalkyl*" is understood to mean a saturated, mono- or polycyclic hydrocarbon group having from 3 to 18 carbon atoms. In the present invention, such cycloalkyl groups may be unsubstituted or may be substituted with one or more halogen. Where applicable for a given moiety (R), a tolerance for one or more non-halogen substituents within a cycloalkyl group will be noted in the specification. Examples of cycloalkyl groups include: cyclopropyl; cyclobutyl; cyclopentyl; cyclohexyl; cycloheptyl; cyclooctyl; adamantane; and, norbornane.

As used herein, "$C_3$-$C_{18}$ *cycloalkylene*" means a divalent radical formed by the removal of two hydrogen atoms

from one or more rings of a cycloalkyl group having from 3 to 18 carbon atoms.

As used herein, an "*$C_6$-$C_{18}$ aryl*" group used alone or as part of a larger moiety - as in "*aralkyl group*" - refers to monocyclic, bicyclic and tricyclic ring systems in which the monocyclic ring system is aromatic or at least one of the rings in a bicyclic or tricyclic ring system is aromatic. The bicyclic and tricyclic ring systems include benzofused 2-3 membered carbocyclic rings. In the present invention, such aryl groups may be unsubstituted or may be substituted with one or more halogen. Where applicable for a given moiety (R), a tolerance for one or more non-halogen substituents within an aryl group will be noted in the specification. Exemplary aryl groups include: phenyl; (C1-C4)alkylphenyl, such as tolyl and ethylphenyl; indenyl; naphthalenyl, tetrahydronaphthyl, tetrahydroindenyl; tetrahydroanthracenyl; and, anthracenyl. And a preference for phenyl groups may be noted.

As used herein, "*$C_6$-$C_{18}$ arylene*" means a divalent radical formed by the removal of two hydrogen atoms from one or more rings of a cycloalkyl group having from 3 to 18 carbon atoms. In general in the present disclosure, such arylene groups may be unsubstituted or may be substituted with one or more halogen.

As used herein, "*$C_2$-$C_{20}$ alkenyl*" refers to hydrocarbyl groups having from 2 to 20 carbon atoms and at least one unit of ethylenic unsaturation. The alkenyl group can be straight chained, branched or cyclic and may optionally be substituted with one or more halogen. Where applicable for a given moiety (R), a tolerance for one or more non-halogen substituents within an alkenyl group will be noted in the specification. The term "*alkenyl*" also encompasses radicals having "cis" and "trans" configurations, or alternatively, "E" and "Z" configurations, as appreciated by those of ordinary skill in the art. In general, however, a preference for unsubstituted alkenyl groups containing from 2 to 10 ($C_{2-10}$) or 2 to 8 ($C_{2-8}$) carbon atoms should be noted. Examples of said $C_2$-$C_{12}$ alkenyl groups include, but are not limited to: $-CH=CH_2$; $-CH=CHCH_3$; $-CH_2CH=CH_2$; $-C(=CH_2)(CH_3)$; $-CH=CHCH_2CH_3$; $-CH_2CH=CHCH_3$; $-CH_2CH_2CH=CH_2$; $-CH=C(CH_3)_2$; $-CH_2C(=CH_2)(CH_3)$; $-C(=CH_2)CH_2CH_3$; $-C(CH_3)=CHCH_3$; $-C(CH_3)CH=CH_2$; $-CH=CHCH_2CH_2CH_3$; $-CH_2CH=CHCH_2CH_3$; $-CH_2CH_2CH=CHCH_3$; $-CH_2CH_2CH_2CH=CH_2$; $-C(=CH_2)CH_2CH_2CH_3$; $-C(CH_3)=CHCH_2CH_3$; $-CH(CH_3)CH=CHCH$; $-CH(CH_3)CH_2CH=CH_2$; $-CH_2CH=C(CH_3)_2$; 1-cyclopent-1-enyl; 1-cyclopent-2-enyl; 1-cyclopent-3-enyl; 1-cyclohex-1-enyl; 1-cyclohex-2-enyl; and, 1-cyclohexyl-3-enyl.

As used herein, "*alkylaryl*" refers to alkyl-substituted aryl groups, both groups being defined as above. Further, as used herein "aralkyl" means an alkyl group substituted with an aryl radical as defined above.

The term "*hetero*" as used herein refers to groups or moieties containing one or more heteroatoms, such as N, O, Si and S. Thus, for example "*heterocyclic*" refers to cyclic groups having, for example, N, O, Si or S as part of the ring structure. "*Heteroalkyl*", "*heterocycloalkyl*" and "*heteroaryl*" moieties are alkyl, cycloalkyl and aryl groups as defined hereinabove, respectively, containing N, O, Si or S as part of their structure.

The term "*equivalent weight*" as used herein refers to the molecular weight divided by the number of a function concerned. As such, "epoxy equivalent weight" (EEW) means the weight of resin, in grams, that contains one equivalent of epoxy.

The present materials and compositions may be defined herein as being "*substantially free*" of certain compounds, elements, ions or other like components. The term "*substantially free*" is intended to mean that the compound, element, ion or other like component is not deliberately added to the material or composition and is present, at most, in only trace amounts which will have no (adverse) effect on the desired properties of the material or composition. An exemplary trace amount is less than 1000 ppm by weight of the material or composition. The term "*substantially free*" encompasses those embodiments where the specified compound, element, ion, or other like component is completely absent from the material or composition or is not present in any amount measurable by techniques generally used in the art.

The term "*anhydrous*" as used herein has equivalence to the term "*substantially free of water*". Water is not deliberately added to a given composition and is present, at most, in only trace amounts which will have no (adverse) effect on the desired properties of the composition.

DETAILED DESCRIPTION OF THE INVENTION

The immediately following disclosure describes the monomers which constitute each part (a), b)) of the copolymer.

a) Co-polymerizable Photoinitiator

The copolymer of the present disclosure comprises a) at least one co-polymerizable photoinitiator in accordance with Formula (I):

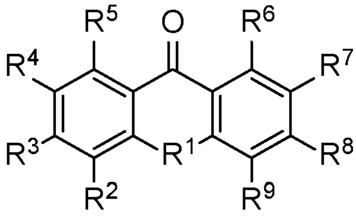

(I)

wherein:

$R^1$ is NH, $CH_2$, S or O;

$R^2$ to $R^9$ are independently selected from H, OH, SH, halide, CN, $C_1$-$C_6$ alkyl, $C_1$-$C_6$ alkoxy, $C_1$-$C_{12}$ alkoxyalkyl, COOH, $SR^{10}$, $COOR^{10}$, $N(R^{10})_2$ or $N(R^{10})_3Q$;

each $R^{10}$ is independently selected from $C_1$-$C_6$ alkyl or $C_6$-$C_{18}$ aryl; and,

Q is halide, acetate, phosphate, sulphate or nitrate,

subject to the proviso that j of the radicals $R^2$ to $R^9$ are a radical selected from

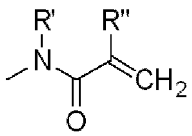
,
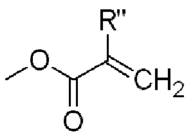
,
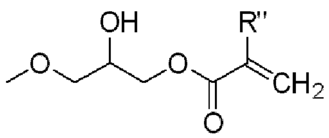
,

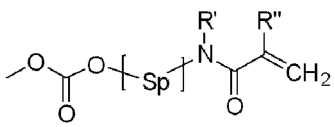
,
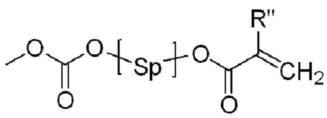
or,
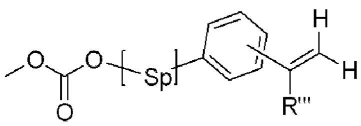

wherein:

j is an integer of from 1 to 3, preferably 1 or 2;

each R' is independently selected from H, $C_1$-$C_4$ alkyl or $C_6$-$C_{18}$ aryl;

R" is H or $C_1$ alkyl;

R‴ is H or $C_1$ alkyl; and,

Sp denotes a spacer group of the following type:

$$-[-\{(X)_k-Y\}_l-(X)_m-]- \text{ or } -[-\{(X)_k-Y\}_l-\{(X)_m-Y\}_n]-$$

wherein:

k is an integer of from 1 to 10;

l is an integer of from 0 to 25;

m is an integer of from 1 to 10;

n is an integer of from 0 to 25;

each X is independently selected from $C_2$-$C_{12}$ alkylene, $C_3$-$C_{18}$ cycloalkylene or $C_6$-$C_{18}$ arylene; and,

each Y is a divalent radical independently selected from the group consisting of:

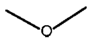, 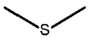, 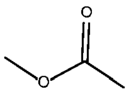, 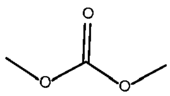, 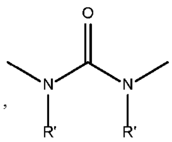, 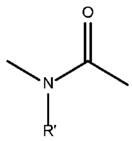, 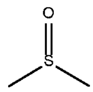 and 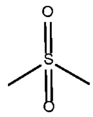

In an embodiment, j of the radicals $R^2$ to $R^9$ of one or each co-polymerizable photoinitiator in accordance with Formula (I) included in the copolymer are a radical selected from

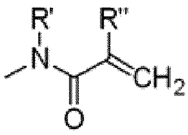, 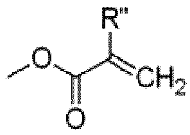,

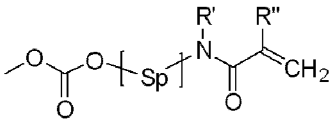, 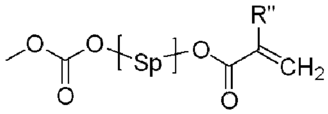 or, 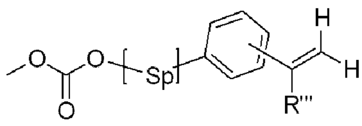

wherein:

j is an integer of from 1 to 3, preferably 1 or 2;

each R' is independently selected from H, $C_1$-$C_4$ alkyl or $C_6$-$C_{18}$ aryl;

R" is H or $C_1$ alkyl;

R"' is H or $C_1$ alkyl; and,

Sp denotes a spacer group of the following type:

$$-[-\{(X)_k-Y\}_l-(X)_m-]- \text{ or } -[-\{(X)_k-Y\}_l-\{(X)_m-Y\}_n]-$$

wherein: k, l, m, n, X and Y are as defined above.

Within Formula (I), the following preferences may be noted: these preferences are independent of one another but are not mutually exclusive and thereby any combination of said preferences may be made.

$R^1$ is preferably NH, S or O, for example $R^1$ is S;

$R^2$ to $R^9$ are preferably independently selected from H, OH, $C_1$-$C_4$ alkyl, $C_1$-$C_4$ alkoxy or $C_1$-$C_8$ alkoxyalkyl and more preferably are independently selected from H or $C_1$-$C_4$ alkyl;

each R' is preferably independently selected from H, $C_1$-$C_4$ alkyl or $C_6$ aryl and is more preferably independently selected from H, $C_1$-$C_2$ alkyl or $C_6$ aryl;

k is preferably an integer of from 1 to 5;

l is preferably an integer of from 0 to 10;

m is preferably an integer of from 1 to 5;

n is preferably an integer of from 0 to 10; and,

each X is preferably independently selected from $C_2$-$C_8$ alkylene, $C_3$-$C_6$ cycloalkylene or $C_6$ arylene.

Exemplary copolymerizable photo-initiators in accordance with Formula (I) include but are not limited to: 9-oxo-3-(propan-2-yl)-9H-thioxanthen-2-yl propen-2-oate; and, N-ethyl-N-[(9-oxo-9H-thioxanthen-3-yl) methyl]prop-2-enamide.

The decomposition of the aforementioned moiety to form radicals causes the cross-linking of the copolymer, therefore forming a cross-linked product. The amount of part a) said at least one copolymerizable photoinitiator in the copolymer needs to be sufficient to enable an adequate crosslinking ability of the resulting copolymer upon irradiation yet should not be too high so as to promote a deterioration of the adhesive properties or breathable properties of the final crosslinked product.

The copolymer of the present disclosure should comprise from 0.1 to 10 wt.%, based on the total weight of monomers, of a) said at least one co-polymerizable photoinitiator in accordance with Formula (I). It is preferred that the copolymer comprises, based on the total weight of monomers, from 0.1 to 5 wt.%, for example from 0.1 to 2 wt.%, of a) said at least one co-polymerizable photoinitiator.

b) Ethylenically unsaturated non-ionic monomers

The copolymer of the present disclosure comprises from 90.0 to 99.9 wt.%, based on the total weight of monomers, of b) at least one ethylenically unsaturated non-ionic monomer which does not bear an epoxide group or a moiety decomposable under photo-irradiation to form a radical. The copolymer may, for instance, comprise, based on the total weight of monomer, from 95.0 to 99.9 wt.% or from 98.0 to 99.9 wt.% of b) said at least one ethylenically unsaturated non-ionic monomer which does not bear an epoxide group or a moiety decomposable under photo-irradiation to form a radical. Such monomers can, in principle, be any ethylenically unsaturated non-ionic monomer. However, the invention is particularly applicable to compositions of which (meth)acrylate monomers constitute at least 70 wt.%, preferably at least 75 wt.% of part b) of the copolymer.

b) i) Aliphatic and Cycloaliphatic (Meth)acrylate Monomers

The copolymer may comprise b) i) at least one (meth)acrylate monomer represented by Formula BI:

$$H_2C{=}CG^aCO_2R^a \qquad \text{(BI)}$$

wherein:

$G^a$ is hydrogen, halogen or a $C_1$ alkyl group; and,
$R^a$ is selected from: $C_1$-$C_{30}$ alkyl; $C_1$-$C_{18}$ hydroxyalkyl; $C_1$-$C_{18}$ alkoxyalkyl; $C_2$-$C_{30}$ heteroalkyl; $C_3$-$C_{30}$ cycloalkyl; $C_2$-$C_8$ heterocycloalkyl; $C_2$-$C_{20}$ alkenyl; or, $C_2$-$C_{12}$ alkynyl.

For example, $R^2$ may be selected from: $C_1$-$C_{18}$ alkyl, $C_1$-$C_{12}$ hydroxyalkyl; $C_2$-$C_{18}$ heteroalkyl, $C_3$-$C_{18}$ cycloalkyl; $C_2$-$C_8$ heterocycloalkyl; $C_2$-$C_8$ alkenyl, or, $C_2$-$C_8$ alkynyl. Desirably, said monomer(s) b) i) are characterized in that $R^a$ is selected from $C_1$-$C_{18}$ alkyl, $C_1$-$C_6$ hydroxyalkyl or $C_3$-$C_{18}$ cycloalkyl.

Examples of (meth)acrylate monomers b) i) in accordance with Formula (BI) include but are not limited to: methyl (meth)acrylate; ethyl (meth)acrylate; butyl (meth)acrylate; hexyl (meth)acrylate; 2-ethylhexyl (meth)acrylate; dodecyl (meth)acrylate; lauryl (meth)acrylate; cyclohexyl (meth)acrylate; isobornyl (meth)acrylate; 2-hydroxyethyl (meth)acrylate (HEMA); 2-hydroxypropyl (meth)acrylate; ethylene glycol monomethyl ether (meth)acrylate; ethylene glycol monoethyl ether (meth)acrylate; ethylene glycol monododecyl ether (meth)acrylate; diethylene glycol monomethyl ether (meth) acrylate; trifluoroethyl (meth)acrylate; and, perfluorooctyl (meth)acrylate.

b) ii) Aromatic (Meth)acrylate Monomers

The copolymer may comprise b) ii) at least one (meth)acrylate monomer represented by Formula BII:

$$H_2C{=}CG^bCO_2R^b \qquad \text{(BII)}$$

wherein:

$G^b$ may be hydrogen, halogen or a $C_1$ alkyl group; and,
$R^b$ may be selected from $C_6$-$C_{18}$ aryl, $C_1$-$C_9$ heteroaryl, $C_7$-$C_{18}$ alkoxyaryl, $C_7$-$C_{18}$ alkaryl or $C_7$-$C_{18}$ aralkyl.

Exemplary (meth)acrylate monomers b) ii) in accordance with Formula (BII) - which may be used alone or in

combination - include but are not limited to: benzyl (meth)acrylate; phenoxyethyl (meth)acrylate; and, phenoxypropyl (meth)acrylate.

b) iii) (Meth)acrylate-functionalized Oligomer

The copolymer may comprise b) iii) at least one (meth)acrylate functionalized oligomer selected from the group consisting of (meth)acrylate-functionalized polyurethanes, (meth)acrylate-functionalized polybutadienes, (meth)acrylic polyol (meth)acrylates, polyester (meth)acrylate oligomers, polyamide (meth)acrylate oligomers and polyether (meth) acrylate oligomers.

Said oligomers b) iii) may have one or more acrylate and / or methacrylate groups attached to the oligomeric backbone, which (meth)acrylate functional groups may be in a terminal position on the oligomer and / or may be distributed along the oligomeric backbone. It is preferred that the or each (meth)acrylate functionalized oligomer b) iii) reacted as a monomer in deriving the copolymer: has two or more (meth)acrylate functional groups per molecule; and / or, has a weight average molecular weight (Mw) of from 300 to 1000 daltons.

b) iv) Nitrogen (N-) functionalized ethylenically unsaturated monomer

The copolymer may in certain embodiments include one or more nitrogen (N-) functionalized ethylenically unsaturated monomer. The nitrogen functionalized groups may be nitrile or may possess imidic, amidic or aminic nitrogen atoms.

Exemplary nitrile monomers include but are not limited to acrylonitrile and methacrylonitrile. Exemplary maleimide monomers include but are not limited to: maleimide; methylmaleimide; ethylmaleimide; propylmaleimide; butylmaleimide; hexylmaleimide; octylmaleimide; dodecylmaleimide; stearylmaleimide; phenylmaleimide; and, cyclohexylmaleimide. And exemplary (meth)acrylamides include but are not limited to: acryloyl morpholine; diacetone (meth) acrylamide; N-methyl (meth)acrylamide; N-ethyl (meth)acrylamide; N-isopropyl (meth)acrylamide; N-t.butyl (meth)acrylamide; N-hexyl (meth)acrylamide; N-cyclohexyl (meth)acrylamide; N-octyl (meth)acrylamide; N-t.octyl (meth)acrylamide; N-dodecyl (meth)acrylamide; N-benzyl (meth)acrylamide; N-(hydroxymethyl)acrylamide; N-isobutoxymethyl acrylamide; N-butoxymethyl acrylamide; N,N-dimethyl (meth)acrylamide; N,N-diethyl (meth)acrylamide; N,N-propyl (meth) acrylamide; N,N-dibutyl (meth)acrylamide; N,N-dihexyl (meth)acrylamide; N,N-dimethylamino methyl acrylamide; N,N-dimethylamino ethyl acrylamide; N,N-dimethylamino propyl acrylamide; N,N-dimethylamino hexyl acrylamide; N,N-diethylamino methyl acrylamide; N,N-diethylamino ethyl acrylamide; N,N-diethylamino propyl acrylamide; N,N-dimethylamino hexyl acrylamide; N-hydroxymethyl (meth)acrylamide; acrylamido-2-methylpropanesulfonate; and, N,N'-methylenebisacrylamide.

In an embodiment, the copolymer includes at least one amino (meth)acrylate monomer. As used herein, the term "*amino (meth)acrylate*" refers to a derivative of methacrylic acid or acrylic acid that has a primary, secondary, or tertiary amino group: the amino group can be part of a linear, branched or cyclic aliphatic group or an aromatic group. Desirably, said at least one amino (meth)acrylate monomer should be a tertiary amino (meth)acrylate, such as, in particular, an N,N-dialkylaminoalkyl(meth)acrylate. As exemplary monomers there may be mentioned: N,N-dimethylaminoethylmethacrylate; N,N-dimethylaminoethylacrylate; N,N-dimethylaminopropylmethacrylate; and, N,N-dimethylaminopropylacrylate.

In important embodiments, the copolymer comprises from 0.1 to 5 wt.%, for example from 0.1 to 2 wt.%, based on the total weight of monomers, of at least one tertiary amino (meth)acrylate. Without intention to be bound by theory, the tertiary amine function provides an active hydrogen donor site for the excited triplet state of the co-polymerized photoinitiator. Further, the tertiary amine may have the functionality of reducing oxygen inhibition of the cross-linking reaction: oxygen can quickly react with free radicals, generated upon photo-initiation of the copolymer, to form unreactive peroxy radicals; tertiary amines may however react with said peroxy radicals, converting them to reactive alkyl-amino radicals.

In the present invention, the copolymer comprises from 0.1 to 2 wt.%, based on the total weight of monomers, of vinyl methyl oxazolidinone (VMOX).

b) v) Further ethylenically unsaturated non-ionic monomers

The present invention does not preclude the inclusion **in** the copolymer of additional ethylenically unsaturated non-ionic monomers not conforming to the definitions of b) i) - iv) given herein. However, the addition of such further monomers should be constrained by the condition that said further monomers b) v) do not exceed 30 wt.% of part b) of the copolymer.

Without intention to limit the present invention, such further ethylenically unsaturated non-ionic monomers may include: $\alpha,\beta$-monoethylenically unsaturated monocarboxylic acids; $\alpha,\beta$-monoethylenically unsaturated dicarboxylic acids; $C_1$-$C_6$ alkyl half-esters of $\alpha,\beta$-monoethylenically unsaturated dicarboxylic acids; $\alpha,\beta$-monoethylenically unsatu-

rated tricarboxylic acids; $C_1$-$C_6$ alkyl esters of $\alpha,\beta$-monoethylenically unsaturated tricarboxylic acids bearing at least one free carboxylic acid group; ethylenically unsaturated sulfonic acids, such as vinylsulfonic acid and styrenesulfonic acid; vinyl esters, such as vinyl acetate, vinyl propionate, vinyl pivalate, vinyl benzoate and monomers of the VEOVA™ series available from Shell Chemical Company; vinyl and vinylidene halides; vinyl ethers such as vinyl ethyl ether; vinyl ketones including alkyl vinyl ketones, cycloalkyl vinyl ketones, aryl vinyl ketones, arylalkyl vinyl ketones, and arylcycloalkyl vinyl ketones; aromatic or heterocyclic aliphatic vinyl compounds; poly(meth)acrylates of alkane polyols, such as ethylene glycol di(meth)acrylate, propylene glycol di(meth)acrylate, butylene glycol di(meth)acrylate, neopentyl glycol di(meth) acrylate, hexylene glycol di(meth)acrylate, trimethylolpropane tri(meth)acrylate, glycerin tri(meth)acrylate, and pentaerythritol tetra(meth)acrylate; poly(meth)acrylates of oxyalkane polyols such as diethylene glycol di(meth)acrylate, dipropylene glycol di(meth)acrylate, triethylene glycol di(meth)acrylate, tetraethylene glycol di(meth)acrylate, dibutylene glycol di(meth)acrylate, di(pentamethylene glycol)dimethacrylate; polyethylene glycol di(meth)acrylates; and, bisphenol-A di(meth)acrylates, such as ethoxylated bisphenol-A (meth)acrylate ("ECIPMA").

Representative examples of other ethylenically unsaturated polymerizable non-ionic monomers b) v) include, without limitation: ethylene glycol dimethacrylate (EGDMA); acrylic, methacrylic and fumaric acids; fumaric, maleic, and itaconic anhydrides, monoesters and diesters with $C_1$-$C_4$ alcohols such as methanol, ethanol, propanol, isopropanol, butanol, isobutanol, and tert-butanol. Representative examples of vinyl monomers include, without limitation, such compounds as: vinyl acetate; vinyl propionate; vinyl ethers, such as vinyl ethyl ether; and, vinyl ethyl ketone. Representative examples of aromatic or heterocyclic aliphatic vinyl compounds include, without limitation, such compounds as styrene, $\alpha$-methyl styrene, vinyl toluene, tert-butyl styrene, 2-vinyl pyrrolidone, 5-ethylidene-2-norbornene and 1-, 3-, and 4-vinylcyclohexene.

For completeness, whilst the above-described co-polymerizable acid monomers should typically be used in the form of free acid, it is not precluded that the constituent acid groups of the monomers be partially or completely neutralized with suitable bases, provided this does not compromise their participation in co-polymerization.

The ethylenically unsaturated monomers constituting part b) of the copolymer may, in some embodiments, comprise both "*soft*" and "*hard*" monomers. For example, the co-polymer may comprise, based on the total weight of said part b): from 80 to 99 wt.% of bs) at least one ethylenically unsaturated monomer which, if homopolymerized, would yield a homopolymer having a glass transition temperature (Tg) of less than 25°C; and, from 1 to 20 wt.% of bh) at least one ethylenically unsaturated monomer which, if homopolymerized, would yield a homopolymer having a glass transition temperature (Tg) of greater than 25°C.

In particular, the co-polymer may comprise, based on the total weight of said part b): from 80 to 99 wt.%, for example from 85 to 99 wt.% or from 85 to 95 wt.% of bs) at least one ethylenically unsaturated monomer which, if homopolymerized, would yield a homopolymer having a glass transition temperature (Tg) of less than 20°C; and, from 1 to 20 wt.%, for example from 1 to 15 wt.% or from 5 to 15 wt.% of bh) at least one ethylenically unsaturated monomer which, if homopolymerized, would yield a homopolymer having a glass transition temperature (Tg) greater than 30°C.

The soft (bs)) and hard (bh)) monomers may be selected from the aforementioned monomers b)i) to b)v) based on available data, calculation or measurement of the glass transition temperature (Tg).

Exemplary soft monomers s) include but are not limited to: ethyl acrylate; isopropyl acrylate; n-butyl acrylate; isobutyl acrylate; sec-butyl acrylate; hexyl acrylate; hexyl methacrylate; 2-ethylhexyl acrylate; 2-ethylhexyl methacrylate; 2-propylheptyl acrylate; isodecyl acrylate; dodecyl acrylate; cyclohexyl acrylate; benzyl acrylate; 1,3-butadiene; 2-methyl-1,3-butadiene (*isoprene*); pentadiene; and, 2-chloro-1,3-butadiene. A preference may be mentioned for the use of one or more of n-butyl acrylate, 2-ethylhexyl acrylate and 2-propylheptyl acrylate as the soft monomer(s).

Exemplary hard monomers h) include but are not limited to: methyl methacrylate; isopropyl methacrylate; tert-butyl acrylate; methacrylic acid; acrylic acid; fumaric acid; vinyl acetate; benzyl methacrylate; $\alpha$-methylstyrene; and, bromostyrene. A preference may be mentioned for the use of one or more of methacrylic acid, acrylic acid and fumaric acid as the hard monomer(s).

Formation of the copolymers by Free Radical Polymerization

The copolymers of the present disclosure are prepared by free radical polymerization. As would be recognized by the skilled practitioner, free radical polymerization is constituted by three stages: initiation, wherein the decomposition of an initiator generates active free radicals which, possessing unpaired electrons, react with the monomers present to generating an initiating radicals chain; propagation, wherein the formed initiating radicals chain attacks a second monomer molecule transferring its active center to the attacked molecule, which process is repeated, growing the polymer chain; and, termination, wherein the growth of macromolecular chains stops, and the polymerization terminates by disabling the active center. The two most common termination mechanisms in radical polymerizations are combination and deprotonation.

Free radical polymerization may be performed in bulk, in emulsion, in suspension or in solution. Without specific intention to limit the present disclosure, the copolymers are preferably prepared by free radical solution polymerization: by

this is meant that a solution of the monomers in a solvent, which is also capable of dissolving the copolymer is polymerized by a free radical polymerization, that is in the presence of the polymerization initiator. The concentration of the monomers in the solution may vary but it will be typical for the ratio by weight of monomer to solvent to be in the range from 1:20 to 2:1, for example from 1:2 to 1.5:1.

The free radical solution polymerization reaction should desirably be carried out in the presence of a polar solvent having a boiling point of at least 20°C, for instance at least 30°C or at least 40°C, as measured at 1 atmosphere pressure (1.01325 Bar). Examples of such polar solvents, which may be used alone or in combination, include but are not limited to: water; $C_1$-$C_8$ alkanols such as methanol, ethanol, n-propanol, isopropanol, n-butanol, sec-butanol and isobutanol; acetonitrile; N,N-di($C_1$-$C_4$)alkylacylamides, such as N,N-dimethylformamide (DMF) and N,N-dimethylacetamide (DMAc); hexamethylphosphoramide; N-methylpyrrolidone; pyridine; esters, such as ($C_1$-$C_8$)alkyl acetates, ethoxydiglycol acetate, dimethyl glutarate, dimethyl maleate, dipropyl oxalate, ethyl lactate, benzyl benzoate, butyloctyl benzoate and ethylhexyl benzoate; ketones, such as acetone, ethyl ketone, methyl ethyl ketone (*2-butanone*) and methyl isobutyl ketone; ethers, such as tetrahydrofuran (THF), 2-methyltetrahydrofuran (2-MeTHF) and 1,2-dimethoxyethane; 1,3-dioxolane; dimethylsulfoxide (DMSO); and, dichloromethane (DCM). In an exemplary embodiment, the polymerization reaction is performed in the presence of a ($C_1$-$C_8$)alkyl acetate and, in particular ethyl acetate.

As noted above, the free radical polymerization will be triggered by means of at least one radical generating thermal initiator. As will be understood by a person skilled in the art, a thermal initiator is a compound which can be activated by thermal energy to generate a radical thereof upon, for instance, heating or irradiation of the infrared or microwave wavelength regions. The polymerization composition should conventionally comprise from 0.1 to 1 wt.%, for example from 0.1 to 0.5 wt.% of said at least one radical generating thermal initiator, based on the total weight of the polymerizable monomers.

Without intention to limit the present invention, an exemplary class of radical generating thermal initiators suitable for use herein are organic peroxides, selected for example from: cyclic peroxides; diacyl peroxides; dialkyl peroxides; hydroperoxides; peroxycarbonates; peroxydicarbonates; peroxyesters; and, peroxyketals.

While certain peroxides - such as dialkyl peroxides - have been disclosed as useful initiators in *inter alia* US Patent No. 3,419,512 (Lees) and US Patent No. 3,479,246 (Stapleton) and indeed may have utility herein, hydroperoxides represent a preferred class of initiator for the present invention. Further, whilst hydrogen peroxide itself may be used, the most desirable polymerization initiators are the organic hydroperoxides. For completeness, included within the definition of hydroperoxides are materials such as organic peroxides or organic peresters which decompose or hydrolyze to form organic hydroperoxides *in situ*: examples of such peroxides and peresters are cyclohexyl and hydroxycyclohexyl peroxide and t-butyl perbenzoate, respectively.

In an embodiment of the invention, the radical generating thermal initiator comprises or consists of at least one hydroperoxide compound represented by the formula:

$$R^pOOH$$

wherein: $R^p$ is an aliphatic or aromatic group containing up to 18 carbon atoms, and preferably wherein: $R^p$ is a $C_1$-$C_{12}$ alkyl, $C_6$-$C_{18}$ aryl or $C_7$-$C_{18}$ aralkyl group.

As exemplary peroxide initiators, which may be used alone or in combination, there may be mentioned: cumene hydroperoxide (CHP); para-menthane hydroperoxide; t-butyl hydroperoxide (TBH); t-butyl perbenzoate; t-butyl peroxy pivalate; di-t-butyl peroxide; t-butyl peroxy acetate; t-butyl peroxy-2-hexanoate; t-amyl hydroperoxide; 1,2,3,4-tetramethylbutyl hydroperoxide; benzoyl peroxide; dibenzoyl peroxide; 1,3-bis(t-butylperoxyisopropyl) benzene; diacetyl peroxide; butyl 4,4-bis (t-butylperoxy) valerate; p-chlorobenzoyl peroxide; t-butyl cumyl peroxide; di-t-butyl peroxide; dicumyl peroxide; 2,5-dimethyl-2,5-di-t-butylperoxyhexane; 2,5-dimethyl-2,5-di-t-butyl-peroxyhex-3-yne; and, 4-methyl-2,2-di-t-butylperoxypentane.

Without intention to limit the present invention, a further exemplary class of radical generating thermal initiators suitable for use herein are azo polymerization initiators, selected for example from: azo nitriles; azo esters; azo amides; azo amidines; azo imidazoline; and, macro azo initiators.

As representative examples of suitable azo polymerization initiators may be mentioned: 2,2'-azobis (2-methylbutyronitrile); 2,2'-azobis(isobutyronitrile); 2,2'-azobis(2,4-dimethylvaleronitrile); 2,2'-azobis(4-methoxy-2,4-dimethylvaleronitrile); 1,1'-azobis(cyclohexane-1-carbonitrile); 4,4'-azobis(4-cyanovaleric acid); dimethyl 2,2'-azobis(2-methylpropionate); 2,2'-azobis[2-methyl-N-(2-hydroxyethyl)propionamide]; 2,2'-azobis (N-butyl-2-methylpropionamide); 2,2'-azobis[2-(2-imidazolin-2-yl)propane]dihydrochloride; 2,2'-azobis[2-(2-imidazolin-2-yl)propane]; 2,2'-azobis(2-methylpropionamidine)dihydrochloride; 2,2'-azobis[N-(2-carboxyethyl)-2-methylpropionamidine]tetrahydrate; 4,4-azobis(4-cyanovaleric acid), polymer with alpha, omega-bis(3-aminopropyl)polydimethylsiloxane (VPS-1001, available from Wako Pure Chemical Industries, Ltd.); and, 4,4'-azobis(4-cyanopentanoicacic)·polyethyleneglycol polymer (VPE-0201, available from Wako Pure Chemical Industries, Ltd.).

Redox initiators are a combination of an oxidizing agent and a reducing agent and may also have utility in the

present invention. Suitable oxidizing agents may be selected from the group consisting of cyclic peroxides, diacyl peroxides, dialkyl peroxides, hydroperoxides, peroxycarbonates, peroxydicarbonates, peroxyesters and peroxyketals. The corresponding reducing agent may be selected from the group consisting of: alkali metal sulfites; alkali metal hydrogensulfites; alkali metal metabisulfites; formaldehyde sulfoxylates; alkali metal salts of aliphatic sulfinic acids; alkali metal hydrogensulfides; salts of polyvalent metals, in particular Co(II) salts and Fe(II) salts such iron(II) sulfate, iron(II) ammonium sulfate or iron(II) phosphate; dihydroxymaleic acid; benzoin; ascorbic acid; and, reducing saccharides, such as sorbose, glucose, fructose and/or dihydroxyacetone.

Aside from initiators, it is considered that the free radical polymerization may be conducted in the presence of chain transfer agents which act to transfer free radicals and which reduce the molecular weight of the obtained polymer and / or control chain growth in the polymerization. When added, the chain transfer agent should constitute from 0.01 to 1 wt.%, based on the total weight of polymerizable monomers.

The process for producing the copolymer is preferably carried out in a manner that the copolymer has a number average molecular weight (Mn) of from 50000 to 500000 daltons, for example from 75000 to 300000 daltons or from 100000 to 250000 daltons. The amount of polymerization initiator and any chain transfer agents present will be determinative of the number average molecular weight of the (co)polymer, although the choice of solvent may also be important.

Without intention to limit the present invention, conventional polymerization conditions will include a temperature in the range of from 0 to 175°C, for example from 25 to 125°C or from 50 to 100°C. The polymerization pressure is generally not critical and, as such, the polymerization may be conducted at sub-atmospheric, atmospheric or super-atmospheric pressure. Pressure aside, the polymerization may be conducted, where necessary, under the exclusion of oxygen: the reaction vessel may be provided with an inert, dry gaseous blanket of, for example, nitrogen, helium and argon.

For completeness, it is considered that the present polymerization may be performed as a batch or semi-batch procedure or as a continuous procedure. As would be recognized by the skilled artisan, in the batch procedure, the monomers to be polymerized and optionally the solvent used in the polymerization procedure are charged to a reaction vessel, while the majority or the total amount of the polymerization initiator is added to the reaction vessel over the course of the polymerization. In a semi-batch procedure, at least a portion - up to and including the total amount - of the polymerization initiator and solvent are initially charged to the reaction vessel: a small portion of the monomers may also be so-charged but the majority of monomers to be polymerized are added to the reaction vessel over the course of the polymerization. In a continuous process the monomers, polymerization initiator and, optionally, the solvent are continuously added to a reaction vessel and the obtained polymer is continuously discharged from the polymerization vessel.

A preference may be mentioned for the performance of the present polymerization as a semi-batch procedure. In particular, at least 75 wt.% of the total weight of monomers to be polymerized should be added to the reaction vessel over the course of the polymerization reaction.

There is no particular intention to limit the timing at which the different functional monomers - part a) and part b) - of the copolymer are introduced into the polymerization procedure. The monomers may be provided to the polymerization vessel at a fixed molar ratio either at the start of the polymerization (for a batch process) or through the entire polymerization process (for semi-batch and continuous processes). In the alternative, the molar ratio of the monomers types may be varied during the course of the polymerization: this is intended to encompass that embodiment where, during the course of the polymerization, only the monomers of part a) are added to the polymerization vessel or conversely only monomers of part b) are added to the polymerization vessel. The skilled artisan may make determinations of suitable molar ratios based on the desired form or randomness of the copolymer and the reactivity ratios of the monomers.

The copolymer reaction product may be isolated and purified using methods known in the art, of which mention may be made of extraction, evaporation, crystallization, distillation and chromatography as suitable techniques. Where a free radical solution polymerization is performed, it is most convenient that the copolymer be isolated by distilling off the solvent and any unreacted starting materials under reduced pressure. Where it is intended that the (optionally purified) copolymer be stored upon production, the polymers should be disposed in a vessel with an airtight and moisture-tight seal. The storage vessel should not permit the penetration of photo-irradiation.

Hot Melt Materials

As noted above, the present disclosure also provides for a reactive hot melt material, in particular a reactive hot melt adhesive material, comprising or consisting of the copolymer as described hereinabove. For surety, it is noted that the copolymer may in certain embodiments be used in itself as a reactive hot melt material without further adjuncts. Thus there may be provided a reactive hot melt material comprising, based on the weight of the material: from 40 to 100 wt.% of i) at least one copolymer as defined herein above and in the appended claims; from 0 to 30 wt.% of ii) at least one tackifying resin; and, from 0 to 30 wt.% of iii) wax.

The pressure sensitive adhesive materials of the present invention may comprise from 0 to 30 wt.%, based on the weight of the material of ii) at least one tackifying resin. Conventionally, the tackifier will be present in an amount up to 10

wt.%, based on the weight of the material. The tackifying resin(s) should be characterized by: a softening point of from 70 to 150°C; and, a viscosity at 150°C of less than 2000 Pa.s.

Exemplary tackifying resins which may be used alone or in combination in the present disclosure include: aliphatic and cycloaliphatic petroleum hydrocarbon resins; aromatic petroleum hydrocarbon resins and the hydrogenated derivatives thereof; aliphatic / aromatic petroleum derived hydrocarbon resins and the hydrogenated derivatives; polycyclopentadiene resins, hydrogenated polycyclopentadiene resins and aromatic modified hydrogenated polycyclopentediene resins; terpenes, aromatic terpenes and hydrogenated terpenes; polyterpenes, aromatic modified polyterpenes and terpene phenolics; copolymers of α-methylstyrene and a further vinyl aromatic monomer; and, gum rosins, gum rosin esters, wood rosins, wood rosin esters, tall oil rosins, tall oil rosin esters and hydrogenated rosin esters.

Exemplary commercial tackifying resins having utility in the present disclosure include: Arkon™ P-70, P-90, P-100, P-125, P-115, M-90, M-100, M-110 and M-120 hydrogenated $C_5$ and/or $C_9$ hydrocarbon feed stocks available from Arakawa Chemical; Eastotac® H-100, H-115, H-130 and H-142R, available from Eastman Chemical Co.; Escorez® 5300, 5320, 5380, 5400, 5600 and 5637, available from Exxon Chemical Co.; Foral 85, available from Pinova, Inc; WINGTACK® 95 and WINGTACK® Extra, available from Sartomer; and, Regalite R9001 and Regalite S5100, available from Eastman Chemical Company.

Waxes constitute an optional component of the material of the present disclosure. The present hot melt material may comprise from 0 to 20 wt.%, based on the weight of the material, of iii) wax. When added, the material should comprise from 0.1 to 20 wt.%, for example from 0.1 to 10 wt.% of wax, based on the weight of the material. Said wax is added to the hot melt material to reduce the melt viscosity thereof. These waxes, which are solid at room temperature, may also be determinative of the set-up time and the softening point of the adhesive.

Without intention to limit the present invention, waxes having utility in the present invention should have a softening point of from 50 to 150°C and may include one or more of: polyethylene having a number average molecular weight (Mn) from 500 to 7500; petroleum waxes, such as paraffin wax and microcrystalline wax; synthetic waxes made by polymerizing carbon monoxide and hydrogen, such as Fischer-Tropsch wax; polyolefin waxes; and, hydrogenated animal, fish or vegetable oils.

To impart heat resistance, it is preferred that the wax of the material comprises or consists of at least one functionalized polyolefin. The or each functionalized polyolefin included in the material should preferably be characterized by a weight average molecular weight of from 2,000 to 20,000 daltons, for example from 2,500-15,000 daltons.

Representative olefin monomers from which the functional polyolefin is derived and which may be used alone or in combination, include but are not limited to: ethylene; propylene; butylenes; pentene; hexylene; heptene; and, octene. A preference for the use of ethylene and / or propylene may be mentioned.

Representative functionalizing monomers include: aliphatic and cycloaliphatic (meth)acrylate monomers; aromatic (meth)acrylate monomers; (meth)acrylate-functionalized oligomer; α,β-ethylenically unsaturated dicarboxylic acids containing from 4 to 6 carbon atoms and the anhydrides, monoesters, and diesters of those acids; α,β-ethylenically unsaturated monocarboxylic acids containing 3 to 5 carbon atoms such as acrylic acid, methacrylic acid, crotonic acid; $C_1$-$C_{18}$ alkyl esters of crotonic acid; silicone (meth)acrylate monomers, such as those taught by and claimed in US Patent No. 5,605,999 (Chu); poly(meth)acrylates of alkane polyols; poly(meth)acrylates of oxyalkane polyols; vinyl esters such as vinyl acetate, vinyl propionate and monomers of the VEOVA™ series available from Shell Chemical Company; vinyl and vinylidene halides; vinyl ethers such as vinyl ethyl ether; and, vinyl ketones including alkyl vinyl ketones, cycloalkyl vinyl ketones, aryl vinyl ketones, arylalkyl vinyl ketones, and arylcycloalkyl vinyl ketones.

Of the aforementioned monomers, a particular preference may be noted for the α,β-ethylenically unsaturated dicarboxylic acids containing from 4 to 6 carbon atoms and the anhydrides, $C_1$-$C_4$ alkyl monoesters and $C_1$-$C_4$ alkyl diesters of those acids. The use of fumaric anhydride, maleic anhydride and itaconic anhydride is favored, of which maleic anhydride is most favored. And good results have been obtained where the material comprises at least one of: maleated polyethylene; maleated polypropylene; or, maleated poly(ethylene-co-propylene).

For completeness, exemplary commercial maleated polyethylene and maleated polypropylene polymers which may have utility herein include: EPOLENE E-43, G-3015, and G-3003 available from Eastman Chemical; A-C 575, A-C 573, available from Honeywell; Fusabond E and Fusabond P available from DuPont.

Adjunct and Additive Ingredients of the Material

The pressure sensitive adhesive materials of the present invention may, of course, also contain standard additives such as: polar rubbers; pigments; fillers; rheology control agents; stabilizers; plasticizers; and, levelling agents. The choice of appropriate additives is limited only in that these must be compatible with the other components of the material and cannot be deleterious to the use of the material.

The present disclosure does not preclude the presence in the adhesive material of at least one polar rubber: such rubbers are typically attained functionalization of apolar (co-)polymers with polar radicals such a nitrile, halogen, carboxyl, urethane or ester groups. Such functionalized rubbers include but are not limited to: nitrile rubber, such as Vamac®

available from DuPont; epoxidized natural rubber; hydroxylated natural rubber; carboxylated natural rubber; epoxidized synthetic rubbers; hydroxylated synthetic rubbers; carboxylated synthetic rubbers; carboxylated nitrile rubber; carboxylated styrene butadiene rubber; hydroxylated styrene butadiene rubber; hydroxylated butadiene rubber; maleated styrene-isoprene-styrene block copolymers (SIS); maleated styrene-ethylene-butylene-styrene block copolymers (SEBS); (meth)acrylate modified SEBS copolymers; sulfonated SEBS copolymers; maleated styrene-ethylene-propylene-styrene block copolymer (SEPS); (meth)acrylate modified SEPS copolymers; and, sulfonated SEPS copolymers.

The material of the present disclosure may comprise electrically non-conductive fillers. Broadly, there is no particular intention to limit the shape of the particles employed as non-conductive fillers: particles that are acicular, spherical, ellipsoidal, cylindrical, bead-like, cubic or platelet-like may be used alone or in combination. Moreover, it is envisaged that agglomerates of more than one particle type may be used. Equally, there is no particular intention to limit the size of the particles employed as non-conductive fillers. However, such non-conductive fillers will conventionally have an average particle size (d50), as measured by laser diffraction, of from 0.1 to 1500 μm, for example from 1 to 1000 μm or from 1 to 500 μm.

Exemplary non-conductive fillers include but are not limited to calcium carbonate, calcium oxide, calcium hydroxide (lime powder), fused silica, amorphous silica, precipitated and/or pyrogenic silicic acid, zeolites, bentonites, wollastonite, magnesium carbonate, diatomite, barium sulfate, alumina, clay, talc, titanium oxide, iron oxide, zinc oxide, sand, quartz, flint, mica, glass beads, glass powder, and other ground mineral substances. Organic fillers can also be used, in particular wood fibers, wood flour, sawdust, cellulose, cotton, pulp, cotton, wood chips, chopped straw, chaff, ground walnut shells, and other chopped fibers. Short fibers such as glass fibers, glass filament, polyacrylonitrile, carbon fibers, Kevlar fibers, or polyethylene fibers can also be added.

Also suitable as non-conductive fillers are hollow spheres having a mineral shell or a plastic shell. These can be, for example, hollow glass spheres that are obtainable commercially under the trade names Glass Bubbles®. Plastic-based hollow spheres, such as Expancel® or Dualite®, may be used and are described in EP 0 520 426 B1: they are made up of inorganic or organic substances and each have a diameter of 1 mm or less, preferably 500 μm or less.

Non-conductive fillers which impart thixotropy to the material may be preferred for many applications: such fillers are also described as rheological adjuvants, e.g. hydrogenated castor oil, fatty acid amides, or swellable plastics such as PVC.

It is also considered that the adhesive material may comprise electrically conductive fillers. Again, there is no particular intention to limit the shape of the particles employed as conductive fillers: particles that are acicular, spherical, ellipsoidal, cylindrical, bead-like, cubic or platelet-like may be used alone or in combination. Moreover, it is envisaged that agglomerates of more than one particle type may be used. Equally, there is no particular intention to limit the size of the particles employed as conductive fillers. However, such conductive fillers will conventionally have an average volume particle size, as measured by laser diffraction / scattering methods, of from 1 to 500 μm, for example from 1 to 200 μm.

Exemplary conductive fillers include, but are not limited to: silver; copper; gold; palladium; platinum; nickel; gold or silver-coated nickel; carbon black; carbon fiber; graphite; aluminum; indium tin oxide; silver coated copper; silver coated aluminum; metallic coated glass spheres; metallic coated filler; metallic coated polymers; silver coated fiber; silver coated spheres; antimony doped tin oxide; conductive nanospheres; nano silver; nano aluminum; nano copper; nano nickel; carbon nanotubes; and, mixtures thereof. The use of particulate silver and / or carbon black as the conductive filler is preferred.

The total amount of fillers should not prevent the material from being readily applicable by the elected method of application to the material to a substrate. That aside, the material of the present invention may conventionally comprise from 0 to 50 wt.%, for example from 0 to 30 wt.% based on the weight of the material, of filler.

"*Stabilizers*" for purposes of this invention are to be understood as antioxidants, UV stabilizers, thermal stabilizers or hydrolysis stabilizers. When present, stabilizers may constitute *in toto* up to 5 wt.%, for instance from 0.1 to 2.5 wt.%, based on the total weight of the material. Standard examples of stabilizers suitable for use herein include: sterically hindered phenols; thioethers; benzotriazoles; benzophenones; benzoates; cyanoacrylates; acrylates; amines of the hindered amine light stabilizer (HALS) type; phosphite compounds; sulfur containing anti-oxidants, such as thioethers and thiodipropionate esters; and, mixtures thereof.

Sterically hindered phenols are well known to those skilled in the art and may be characterized as phenolic compounds which also contain sterically bulky radicals - such as tertiary butyl groups - in close proximity to the phenolic hydroxyl group thereof. The presence of these radicals in the vicinity of the hydroxyl group serves to retard its stretching frequency, and correspondingly, its reactivity. Representative sterically hindered phenols include: 1,3,5-trimethyl-2,4,6-tris-(3,5-di-tert-butyl-4-hydroxybenzyl)-benzene; pentaerythrityl tetrakis-3(3,5-d i-tert-butyl-4-hydroxyphenyl)-propionate; n-octadecyl-3(3,5-di-tert-butyl-4-hydroxyphenyl)-propionate; 4,4'-methylenebis(2,6-tert-butyl-phenol); 4,4'-thiobis(6-tert-butyl-o-cresol); 2,6-di-tertbutylphenol; 6-(4-hydroxyphenoxy)-2,4-bis(n-octyl-thio)-1,3,5 triazine; di-n-octylthio)ethyl 3,5-di-tert-butyl-4-hydroxy-benzoate; and, sorbitol hexa[3-(3,5-di-tert-butyl-4-hydroxy-phenyl)-propionate].

Exemplary commercial stabilizers which may be used alone or in combination include: SUMILIZER™ GM, SUMILIZER™ TPD and SUMILIZER™ TPS manufactured by Sumitomo Chemical Co., Ltd.; IRGANOX™ 656, IRGANOX™ 1010, IRGANOX™ HP2225FF, IRGAFOS™168, IRGANOX™ 1076, IRGANOX™ 1520, IRGANOX™ 1726, and TINUVIN™ P manufactured by Ciba Specialty Chemicals; JF77 ™ manufactured by Johoku Chemical Co., Ltd.; TOMINOX™ TT manufactured by API Corporation; Cyanox® LTDP, available from Cytec Industries; Ethanox® 330, available from Albemarle Corp; and, AO-412S™ manufactured by ADEKA CORPORATION.

In certain embodiments, plasticizers may be included to moderate the softness and flexibility of the solidified adhesive material. One or more plasticizers may in this case be selected from the group consisting of: vegetable oil; mineral oil; soybean oil; aromatic esters such as dioctyl phthalate, diundecyl phthalate, tricresyl phosphate and triisononyl mellitate; linear esters such as di-tridecyl adipate; chlorinated Paraffin; aromatic and napthenic process oils; alkyl naphthalenes; and, low molecular weight polyisoprene, polybutadiene, or polybutylene resins. Conventionally, the amount of plasticizer should be from 0 to 20 wt.%, preferably from 0 to 10 wt.% or from 0 to 5 wt.% based on the total weight of the material.

Methods and Applications

The reactive hot melt adhesive material may be formulated by bringing together the constituent ingredients in pre-determined amounts. In those embodiments where ingredients are to be mixed, this may be performed using any of the mixing techniques known in the art: it would certainly be preferred however that the ingredients are not mixed by hand but are instead mixed by machine - a static or dynamic mixer, for example - in pre-determined amounts under anhydrous conditions and without intentional photo-irradiation.

A first representative example of a mixing procedure involves placing all the components, except the hybrid base copolymer(s), in a jacketed mixing kettle equipped with a rotor, and thereafter elevating the temperature of the mixture to a temperature above the softening point of the base polymer which is to be added: a temperature of from 100°C to 160°C may be sufficient but it will be understood that the precise temperature would depend on the softening points and melting points of the particular ingredients. The polymers are subsequently introduced to the kettle under agitation and the mixing is allowed to continue until a consistent and homogenous mixture is formed. The contents of the kettle may be protected with an inert gas, such as carbon dioxide or nitrogen, during the entire mixing process.

In a second representative example of a mixing procedure, a resin or oil which is adapted to the chemistry of the base copolymer is first charged into the mixing kettle. The resin or oil is then melted or conditioned to yield a liquid to which the base copolymer(s) are then added stepwise so as to become dissolved in the liquid. The remaining ingredients are added to the mixing kettle after the addition of the base copolymer.

In a further representative example, all ingredients of the material may either be brought together or mixed homogenously together in solid form. The provided solid can then be disposed in a melting tank and brought to the requisite temperature for dispensing in a molten form. Again the precise temperature of the melting tank would depend on the softening points and melting points of the particular ingredients.

Generally, the hot melt materials may be applied to substrates by conventional methods such as: brushing; roll coating; doctor-blade application; printing methods; jetting; omega coating; control seam coating; dot coating; and, spraying methods, including but not limited to air-atomized spray, air-assisted spray, airless spray, high-volume low-pressure spray, slot spray and curtain spray coating. In that embodiment where the hot melt material is to be employed in potting operations, the material would typically be introduced into a defined mold by static potting or centrifugal potting. In a static potting technique, the material is introduced into the potting mold while the mold is substantially stationary. In centrifugal potting methods, the potting material is introduced into a potting mold whilst the mold is rotated such that the rotation of the mold forces the potting material towards an end of the rotating mold by centrifugal force. In either the static or centrifugal potting methods, the introduction of the hot melt material may be either through contact or non-contact means.

For coating, adhesive and sealant applications, it is recommended that the materials be applied to a wet film thickness of from 10 to 250 μm, for example from 25 to 150 μm. In an alternative statement, which is not intended to be mutually exclusive of the above, it is recommended that the materials be applied such that the coating weight of the materials is from 50 to 250 grams per square metre (gsm), preferably from 50 to 150 gsm.

Central to any of the aforementioned methods of application is that the hot melt material is sufficiently fluid upon application for it to coat the substrates to which is applied. In certain circumstances where the substrate is porous, the hot melt material may be rendered sufficiently fluid to penetrate that substrate. It is thus preferred that the hot melt material be characterized by a melt viscosity, as determined at 130°C, of at most 100000 mPa·s.

That aside, useful application temperatures will typically range from 100°C to 160°C or from 110°C to 150°C with lower temperatures within this range being preferred as they may extend the working life of the curable material. The temperature of the material may be raised above its mixing temperature to the application temperature using conventional means, including microwave induction.

Immediately after application, the applied materials are cured under photo-irradiation. The energy source used to promote the curing of the applied materials will emit at least one of ultraviolet (UV) radiation, infrared (IR) radiation, visible light, X-rays, gamma rays, or electron beams (e-beam). Subsequent to their application, the materials may typically be

activated in less than 2 minutes, and commonly between 0.1 and 100 seconds - for instance between 0.1 and 10 seconds - when irradiated using commercial curing equipment. For completeness, the activation of the materials may be effected in an inline process wherein the coated substrate is conveyed under the curing equipment as it emits radiation: it will be understood that the aforementioned activation times will be the time of exposure of the applied materials to the irradiation in such an inline process.

Irradiating ultraviolet light should typically have a wavelength of from 150 to 600 nm and preferably a wavelength of from 200 to 450 nm. Useful sources of UV light include, for instance, low intensity fluorescent lamps, metal halide lamps, microwave powered lamps, xenon lamps, UV-LED lamps and laser beam sources such as excimer lasers and argon-ion lasers. The use of UV-LED lamps is preferred whereas the use of mercury based UV light systems is neither desirable nor required.

Where an e-beam is utilized to cure the applied material, standard parameters for the operating device may be: an accelerating voltage of from 0.1 to 100 keV; a vacuum of from 10 to $10^{-3}$ Pa; an electron current of from 0.0001 to 1 ampere; and, power of from 0.1 watt to 1 kilowatt.

The amount of radiation necessary to sufficiently cure an individual material - such that a coating thereof becomes fixed, for example - will depend on a variety of factors including the angle of exposure to the radiation and the thickness of an applied material. Broadly, however, a curing dosage of from 100 to 10000 $mJ/cm^2$ may be cited as being typical: curing dosages of from 200 to 8000 $mJ/cm^2$, such as from 300 to 6000 $mJ/cm^2$ may be considered highly effective.

The reactive hot melt materials according to the invention may find utility *inter alia* in: casting resins; potting and encapsulation resins; binding agents for fibers and / or particles; the coating of glass; the coating of mineral building materials, such as lime- and / or cement-bonded plasters, gypsum-containing surfaces, fiber cement building materials and concrete; the coating and sealing of wood and wooden materials, such as chipboard, fiber board and paper; the coating of metallic surfaces; and, the coating and sealing of various plastic surfaces.

It is evident that the hot melt material may be used for the bonding of first and second substrates: broadly, the material will be applied between the two substrates and cured under photo-irradiation. Such a bonding operation may be performed using two main techniques, direct application of the hot melt material and application via transfer which will be detailed hereinbelow. In a first embodiment, the hot melt material may be applied to at least one surface ($S^1$) of a first substrate and to at least one surface ($S^2$) of a second substrate and the respective surfaces ($S^1$, $S^2$) of the first and second substrates contacted to interpose the material. In an alternative embodiment, the hot melt material may be applied only to a surface of the first substrate and that surface is then brought into contact with the second substrate.

The first ($S^1$) and second ($S^2$) substrates may be the same or different but in either case are not particularly restricted. The substrates to be bonded may, for example, comprise or consist of: ferrous metallic materials, such as iron, stainless steel, cold-rolled steel and electro-galvanized steel; nonferrous metallic materials, such as aluminium, zinc and alloys thereof; silicon materials such as glass, monocrystal silicon, polycrystal silicon, amorphous silicon or silicon oxide; engineered plastics; thermoplastic materials such as polyolefins, of which polyethylene (PE) and polypropylene (PP) may be mentioned, polybutylene terephthalate (PBT), polycarbonate (PC) and acrylonitrile butadiene styrene (ABS); and, carbon materials, such as carbon fiber.

For completeness, the shape of the first and second substrates is also not particularly restricted, provided that the substrates have a shape which can be bonded. Desirably the first substrate to be bonded will possess a surface which has a shape complementary to a surface of the second substrate, allowing the first and second substrates to be mated with the material disposed therebetween.

As mentioned above, the first and second substrates ($S^1$, $S^2$) may be bonded together by a transfer method. Such a method comprises: (i) providing an article (A) comprising a curable film of the hot melt material as defined above, wherein the film is disposed on a release liner and / or a carrier substrate; (ii) attaching the curable film of the article to at least one of the substrates ($S^1$, $S^2$); (iii) mating the substrates ($S^1$, $S^2$); and, (iv) curing the film between the substrates to be bonded together, wherein the release liner of the article (A), if present, is removed before and/or after step (ii).

The article (A) comprising a curable film of the hot melt materials as defined above which is disposed on a release liner and / or carrier substrate represents a further aspect of the present disclosure. The article (A) may be a label, a single-sided tape, a transfer tape or a double-sided tape.

For completeness but without intention to limit the present disclosure, exemplary articles (A) will be described with reference to the appended drawings in which:

Figure 1 illustrates a single-sided tape absent a release liner according to an embodiment of the present invention.

Figure 2 illustrates an embodiment of the article of the present invention that may correspond to a single-sided tape or a label with a release liner.

Figure 3 illustrates a transfer tape with one release liner according to an embodiment of the present invention.

Figure 4 illustrates a transfer tape with two release liners according to an embodiment of the present invention.

Figure 5 illustrates a double-sided tape with one release liner according to an embodiment of the present invention.

Figure 6 illustrates a double-sided tape with two release liners according to an embodiment of the present invention.

In Figure 1, a single sided tape (101) is shown which consists of a carrier (102) and a curable film (103). The embodiment depicted in Figure 2 could be either a single sided tape or a label (201), which tape or label consists of a carrier (102) and a curable film (103): the curable film (103) is covered with a release liner (104) to protect the curable film and prevent unwanted adhesion of the curable film (103).

Figures 3 and 4 depict transfer tapes which have particular utility for transferring the curable film from a release liner to a target surface ($S^1$, $S^2$). In Figure 3, the transfer tape (301) consists of a release liner (104) coated with a curable film (103) of the hot melt material. The release liner (104) should have release properties on both sides but should not possess equivalent release properties on those sides: consequently, when winding and unwinding the transfer tape (301) from a roll - there will be a differentiation between the release effects on the two sides of the release liner (104).

In Figure 4, the transfer tape (401) consists of a curable film (103) interposed between first (104) and second (105) release liners. The first (104) and second (105) release liners may have different release properties relative to the curable film which allows these liners (104, 105) to be removed independently of one another.

A double-sided adhesive tape (501) is depicted in Figure 5 and consists of a carrier (102) having a first curable film (103) on a first side of the carrier (102) and a second curable film (106) on a second side of the carrier (102). The first (103) and second (106) curable films may be the same of different in that they may be obtained from the same or different hot melt materials subject to the proviso that at least one of said hot melt materials is provided in accordance with the present disclosure. A release liner (104) covers and protects the second curable film (106), which liner (104) should have release properties on both sides but should not possess equivalent release properties on those sides. In these circumstances - when winding and unwinding the transfer tape (501) from a roll - there will be a differentiation between the release effects on the two sides of the release liner (104).

A second embodiment of a double-sided adhesive tape (601) is provided in Figure 6. The depicted tape (601) consists of a carrier (102) having a first curable film (103) on a first side of the carrier (102) and a second curable film (106) on a second side of the carrier (102). The first (103) and second (106) curable films may be the same of different, that is they may be obtained from the same or different hot melt materials subject to the proviso that at least one of said hot melt materials is provided in accordance with the present disclosure. A first release liner (104) covers and protects the first curable film (103). A second release liner (105) covers and protects the second curable film (106). The first (104) and second (105) release liners may have different release properties relative to the curable films (103, 106).

In forming the aforementioned article (A), the hot melt materials may be applied to the release liner(s) and / or the carrier and then cooled. The cooling can be carried out, for example, by applying the hot melt material to the substrate which is conveyed by a coating roll having chilled water circulating through its interior. Alternatively, the hot melt material and the substrate - or a thermoplastic precursor of the substrate - can be co-extruded as a laminate, which laminate is then cooled and optionally stretched to induce the partial orientation and crystallization.

Manufacturing process parameters - including *inter alia* the particular material used, the applied thickness thereof and the operating conditions of the manufacturing equipment - can, of course, affect the degree of orientation and, as a result, the anisotropic, tack and peel force properties of the pressure sensitive adhesive. For example, if the cooling rate is slow, the cooled pressure sensitive adhesive may have high tack and isotropic peel force. As the cooling rate is accelerated, the pressure sensitive adhesive will have less tack and the peel force will be more anisotropic. At fast cooling rates, the cooled pressure sensitive adhesive may have quite low pressure-sensitive tack and low or imperceptible peel force.

The following examples are illustrative of the present invention and are not intended to limit the scope of the invention in any way.

EXAMPLES

The following compounds were used in the Examples:

| | |
|---|---|
| AIBN: | Azobisisobutyronitrile, available from Sigma Aldrich. |
| VMOX: | Vinyl methyl oxazolidinone, available from BASF SE. |
| DMAEA: | Dimethylaminoethyl acrylate, available from Sigma Aldrich. |
| AA: | Acrylic acid, available from Sigma Aldrich. |
| BA: | Butylacrylate, available from Sigma Aldrich. |
| 2-EHA: | 2-ethylhexylacrylate, available from Sigma Aldrich. |

FA: Fumaric acid, available from Sigma Aldrich.
2-PHpA: 2-propylheptylacrylate, available from Sigma Aldrich.
Foral F85: Rosin based tackifier, available from Pinova Inc.

i) Copolymer Synthesis Examples (CP1, CP2, CP4, CP6 and CP7 are not according to the invention).

Seven copolymers were prepared by free radical polymerization in accordance with the monomer compositions disclosed in Table 1 herein below.

Table 1

| Monomers | Synthesis Example | | | | | | |
|---|---|---|---|---|---|---|---|
| | CP1 (pbw) | CP2 (pbw) | CP3 (pbw) | CP4 (pbw) | CP5 (pbw) | CP6 (pbw) | CP7 (pbw) |
| AA | 6.0 | 6.0 | 6.0 | 6.0 | 1.0 | | |
| FA | | | | | | 15.0 | 10.0 |
| BA | 94.0 | 94.0 | | | 97.0 | | |
| 2-EHA | | | 94.0 | 94.0 | | | |
| 2-PHpA | | | | | | 85.0 | 90.0 |
| 9-oxo-3-(propan-2-yl)-9H-thioxanthen-2-yl propen-2-oate | 0.5 | 4.0 | 1.0 | 1.0 | 1.0 | | |
| N-ethyl-N-[(9-oxo-9H-thioxanthen-3-yl) methyl]prop-2-enamide | | | | | | 1.0 | 1.0 |
| VMOX | | | 1.0 | | 1.0 | | |
| DMAEA | | | | 1.0 | | | |

Polymerization was conducted in ethyl acetate solvent using from 0.1 to 1 parts by weight of AIBN as the free radical initiator. For copolymers 1 to 6 (CP1 to CP6) the solvent was removed under reduced pressure at 130°C at the conclusion of the polymerization. For copolymer 7 (CP7), at the conclusion of the polymerization, Foral F85 tackifier was combined with the copolymer in an amount of 15 wt.% based on the weight of the copolymer: the solvent was removed from the mixture obtained under reduced pressure at 130°C, the product being denoted as HM7.

ii) Analytical Tests

The following analytical tests were conducted on the hot melt materials mentioned herein below. For completeness, the peel strength tests, static shear tests and shear adhesion failure tests (SAFT) were performed at: a number of different coating weights (*gram per square metre, gsm*); and, a number of different dosages of UV-radiation for the curing of the reactive hot melt materials.

*Viscosity:* The viscosities given herein have been measured at 120°C, 130°C and 140°C, employing a Thermosel heating chamber containing an 11g sample of the material and a Brookfield DVII Viscometer, Spindle 27.

*Coating and Curing*: Acrylic Copolymers CP1 to CP6 and material HM7 were pre-heated in an oven at 120°C. Using a lab coater of which both rolls had been heated to from 120 to 130°C, the materials were coated onto a 50μm thick silicone release liner to a wet film thickness of 80μm. The materials were then irradiated with a UV-A LED ($\lambda$ = 365 nm) at a dosing level of 1500 mJ/cm$^2$. The obtained films were then laminated with etched polyethylene terephthalate foil having a thickness of 50 μm and conditions at 23°C and 50% relative humidity for 24 hours. The appearance of the cured films was noted.

*Peel strength:* This parameter was measured as follows in accordance with International Standards Organization (ISO) Standard 11339:2010-06. A standardized steel adherend (*available from Rocholl*) was employed which had been pre-treated by cleaning with acetone and ethyl acetate and permitted to dry for 30 minutes at room temperature and 50% relative humidity. Each adhesive member was cut into a 25 mm×150 mm film which was then laminated onto the steel adherend by rolling a 2 kg roller back and forth for 3 strokes at a rate of 10 mm/s: the steel adherend had been The laminate was left standing for a 20 minutes at room temperature and 50% relative humidity. The adhesive film was peeled off the surface of the adherend at a defined speed of 300 mm / min in a 180-degree direction. The force (*peel force*) required for such peeling was measured and recorded as the bond strength (N/inch).

*Shear Adhesion Failure Test (SAFT):* The instrument ES 07-II, commercially available from Elastocon, was used to test the hot-fail temperature of hot melt materials under shear in accordance with ASTM D4498. Each adhesive member was cut into a 25 mm× 25mm film which was then laminated on a standardized adherend by rolling a 2 kg roller back and forth two times at a rate of 10 mm/s. A weight (1kg) was attached to each member and the temperature was increased from room temperature at controlled rate (0.5°C/min) until either a temperature of 200°C is attained or the adhesive member failed. The result of the aforementioned tests are provided in Table 2 below.

Table 2

| Monomers | | Hot Melt Material | | | | | | |
|---|---|---|---|---|---|---|---|---|
| | | CP1 | CP2 | CP3 | CP4 | CP5 | CP6 | HM7 |
| Appearance of Cured Film | | Transparent; slightly yellow | Transparent; slightly yellow | Transparent; slightly yellow | Transparent; slightly yellow | Transparent; slightly yellow | Transparent; slightly yellow | Transparent; slightly yellow |
| Viscosity (mPa. s) | 120 °C | 75000 | 75000 | 90000 | 120000 | 65000 | 105000 | 60000 |
| | 130 °C | 60000 | 60000 | 75000 | 90000 | 45000 | 90000 | 45000 |
| | 140 °C | 45000 | 45000 | 60000 | 60000 | 25000 | 75000 | 30000 |
| Peel Strength on Steel (N/inch) | | 19 | 1.5 | 11 | 20 | 20 | 15 | 30 |
| Shear Adhesion Failure Test (SAFT) at 0.5°C/min, 1kg load (°C/inch$^2$) | | >190 | >190 | >190 | >190 | >190 | >190 | 100 |

## Claims

1. A copolymer obtained by free radical polymerization, said copolymer comprising, based on the total weight of monomers:

from 0.1 to 10 wt.% of a) at least one co-polymerizable photoinitiator in accordance with Formula (I):

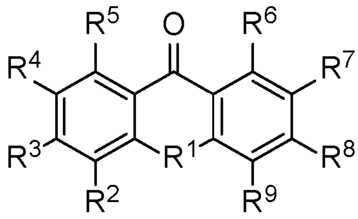

(I)

wherein:

$R^1$ is NH, $CH_2$, S or O;
$R^2$ to $R^9$ are independently selected from H, OH, SH, halide, CN, $C_1$-$C_6$ alkyl, $C_1$-$C_6$ alkoxy, $C_1$-$C_{12}$ alkoxyalkyl, COOH, $SR^{10}$, $COOR^{10}$, $N(R^{10})_2$ or $N(R^{10})_3Q$;
each $R^{10}$ is independently selected from $C_1$-$C_6$ alkyl or $C_6$-$C_{18}$ aryl; and,
Q is halide, acetate, phosphate, sulphate or nitrate,

subject to the proviso that j of the radicals $R^2$ to $R^9$ are a radical selected from

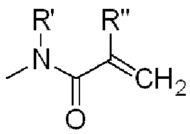 , 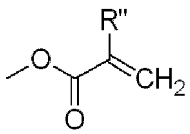 , 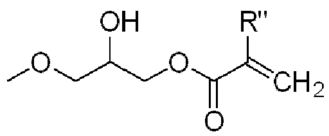 ,

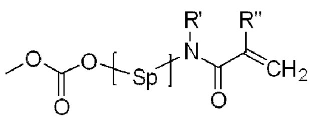 , 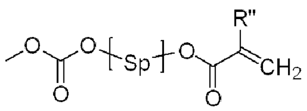 or, 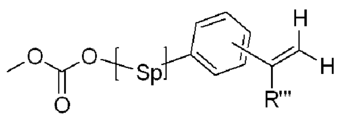

wherein:

j is an integer of from 1 to 3, preferably 1 or 2;
each R' is independently selected from H, $C_1$-$C_4$ alkyl or $C_6$-$C_{18}$ aryl;
R" is H or $C_1$ alkyl;
R‴ is H or $C_1$ alkyl; and,
Sp denotes a spacer group of the following type:

$$-[-\{(X)_k-Y\}_l-(X)_m-]- \text{ or } -[-\{(X)_k-Y\}_l-\{(X)_m-Y\}_n]-$$

wherein:

k is an integer of from 1 to 10;
l is an integer of from 0 to 25;
m is an integer of from 1 to 10;
n is an integer of from 0 to 25;
each X is independently selected from $C_2$-$C_{12}$ alkylene, $C_3$-$C_{18}$ cycloalkylene or $C_6$-$C_{18}$ arylene; and,
each Y is a divalent radical independently selected from the group consisting of:

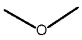, 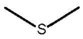, 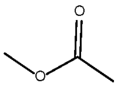, 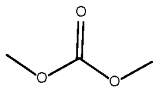, 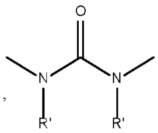, 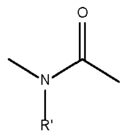, 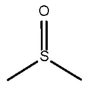 and 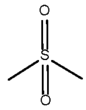;

and,

from 90 to 99.9 wt.% of b) at least one ethylenically unsaturated non-ionic monomer which does not bear an epoxide group or a moiety decomposable under photo-irradiation to form a radical, wherein part b) comprises from 0.1 to 2 wt.%, based on the total weight of monomers, of b) vinyl methyl oxazolidinone (VMOX).

**2.** The copolymer according to claim 1 comprising, based on the total weight of monomers:

from 0.1 to 5 wt.%, preferably from 0.1 to 2 wt.% of a) said at least one co-polymerizable photoinitiator in accordance with Formula (I); and,
from 95 to 99.9 wt.%, preferably from 98 to 99.9 wt.% of b) said at least one ethylenically unsaturated non-ionic monomer which does not bear an epoxide group or a moiety decomposable by photo-irradiation to form a radical.

**3.** The copolymer according to claim 1 or claim 2, wherein $R^1$ is NH, S or O.

**4.** The copolymer according to any one of claims 1 to 3, wherein $R^2$ to $R^9$ are independently selected from H, OH, $C_1$-$C_4$ alkyl, $C_1$-$C_4$ alkoxy or $C_1$-$C_8$ alkoxyalkyl.

**5.** The copolymer according to claim 4, wherein $R^2$ to $R^9$ are independently selected from H or $C_1$-$C_4$ alkyl.

**6.** The copolymer according to any one of claims 1 to 5, wherein each R' is independently selected from H, $C_1$-$C_4$ alkyl or $C_6$ aryl.

**7.** The copolymer according to claim 1 or claim 2, wherein part a) comprises at least one monomer selected from the group consisting of: 9-oxo-3-(propan-2-yl)-9H-thioxanthen-2-yl propen-2-oate; and, N-ethyl-N-[(9-oxo-9H-thioxanthen-3-yl) methyl]prop-2-enamide.

**8.** The copolymer according to any one of claims 1 to 7 comprising, based on the total weight of said part b):

from 80 to 99 wt.%, of bs) at least one ethylenically unsaturated monomer which, if homopolymerized, would yield a homopolymer having a glass transition temperature (Tg) of less than 25°C; and,
from 1 to 20 wt.% of bh) at least one ethylenically unsaturated monomer which, if homopolymerized, would yield a homopolymer having a glass transition temperature (Tg) of greater than 25°C.

**9.** The copolymer according to claim 8 comprising, based on the total weight of said part b):

from 80 to 99 wt.%, preferably from 85 to 99 wt.% and more preferably from 85 to 95 wt.% of bs) at least one ethylenically unsaturated monomer which, if homopolymerized, would yield a homopolymer having a glass transition temperature (Tg) of less than 20°C; and,
from 1 to 20 wt.%, preferably from 1 to 15 wt.% and more preferably from 5 to 15 wt.% of bh) at least one ethylenically unsaturated monomer which, if homopolymerized, would yield a homopolymer having a glass transition temperature (Tg) greater than 30°C.

**10.** The copolymer according to any one of claims 1 to 9, wherein part b) comprises from 0.1 to 5 wt.%, preferably from 0.1 to 2 wt.%, based on the total weight of monomers, of b) iv) at least one tertiary amino (meth)acrylate.

**11.** A material which is crosslinkable under photoirradiation, said material comprising or consisting of a copolymer as defined in any one of claims 1 to 10.

**12.** A reactive hot melt composition which is crosslinkable under photoirradiation, said composition comprising, based on the weight of the composition:

from 20 to 100 wt.% i) at least one copolymer as defined in any one of claims 1 to 10;
from 0 to 60 wt.% of ii) at least one tackifying resin; and,
from 0 to 20 wt.% of iii) wax.

**13.** A coating, adhesive or sealant obtained by the crosslinking under photoirradiation of the reactive hot melt composition as defined in claim 12.

**14.** A hot melt pressure sensitive adhesive (HMPSA) obtained by the crosslinking under photoirradiation of the reactive hot melt composition as defined in claim 12.

**15.** An article (A) comprising a curable film of the reactive hot melt composition as defined in claim 12, said film being disposed on a release liner and / or a carrier substrate.

**16.** The article (A) according to claim 15 which is a label, a single-sided tape, a transfer tape or a double-sided tape.

**Patentansprüche**

**1.** Copolymer, das durch radikalische Polymerisation erhalten wird, das Copolymer umfassend, basierend auf dem Gesamtgewicht der Monomere:

0,1 bis 10 Gew.-% a) mindestens eines copolymerisierbaren Photoinitiators gemäß Formel (I):

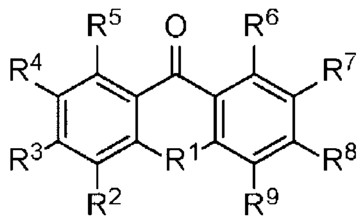

(I)

wobei: $R^1$ NH, $CH_2$, S oder O ist;
$R^2$ bis $R^9$ aus H, OH, SH, Halogenid, CN, $C_1$-$C_6$-Alkyl, $C_1$-$C_6$-Alkoxy, $C_1$-$C_{12}$-Alkoxyalkyl, COOH, $SR^{10}$, $COOR^{10}$, $N(R^{10})_2$ oder $N(R^{10})_3Q$ unabhängig ausgewählt sind;
jedes $R^{10}$ aus $C_1$-$C_6$-Alkyl oder $C_6$-$C_{18}$-Aryl unabhängig ausgewählt ist; und
Q Halogenid, Acetat, Phosphat, Sulfat oder Nitrat ist,
unter der Maßgabe, dass j der Reste $R^2$ bis $R^9$ ein Rest sind, ausgewählt aus

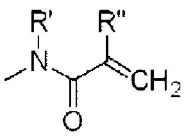 , 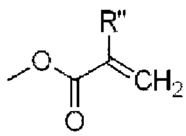 , 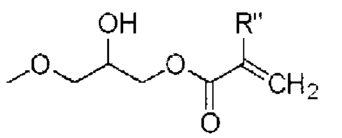 ,

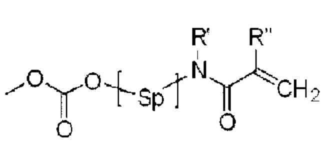 , 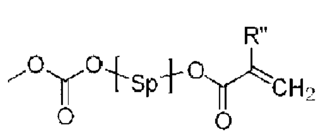 oder 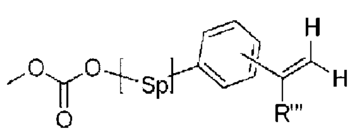

wobei: j eine ganze Zahl von 1 bis 3, vorzugsweise 1 oder 2 ist;
jedes R' aus H, $C_1$-$C_4$-Alkyl oder $C_6$-$C_{18}$-Aryl unabhängig ausgewählt ist;
R'' H oder $C_1$-Alkyl ist;
R''' H oder $C_1$-Alkyl ist; und
Sp eine Spacergruppe der folgenden Art bezeichnet:

$$-[-\{(X)_k-Y\}_l-(X)_m-]- \text{ oder } -[-\{(X)_k-Y\}_l-\{(X)_m-Y\}_n]-$$

wobei: k eine ganze Zahl von 1 bis 10 ist;
l eine ganze Zahl von 0 bis 25 ist;

m eine ganze Zahl von 1 bis 10 ist;
n eine ganze Zahl von 0 bis 25 ist;
jedes X aus $C_2$-$C_{12}$-Alkylen, $C_3$-$C_{18}$-Cycloalkylen oder $C_6$-$C_{18}$-Arylen unabhängig ausgewählt ist; und
jedes Y ein zweiwertiger Rest ist, unabhängig ausgewählt aus der Gruppe, bestehend aus:

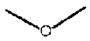, 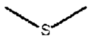, 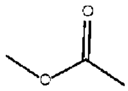, 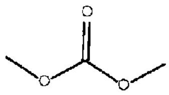, 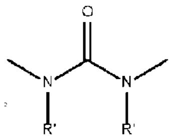, 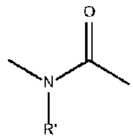, 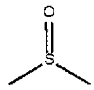 und 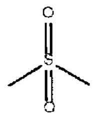;

und
90 bis 99,9 Gew.-% b) mindestens eines ethylenisch ungesättigten nichtionischen Monomers, das keine Epoxidgruppe oder keinen unter Photobestrahlung zersetzbaren Molekülteil trägt, um einen Rest auszubilden, wobei Teil b) 0,1 bis 2 Gew.-%, basierend auf dem Gesamtgewicht der Monomere, b) Vinylmethyloxazolidinon (VMOX) umfasst.

**2.** Copolymer nach Anspruch 1, umfassend, basierend auf dem Gesamtgewicht der Monomere:

0,1 bis 5 Gew.-%, vorzugsweise 0,1 bis 2 Gew.-%, a) des mindestens einen copolymerisierbaren Photoinitiators gemäß Formel (I); und
95 bis 99,9 Gew.-%, vorzugsweise 98 bis 99,9 Gew.-%, b) des mindestens einen ethylenisch ungesättigten nichtionischen Monomers, das keine Epoxidgruppe oder keinen durch Photobestrahlung zersetzbaren Molekülteil trägt, um den Rest auszubilden.

**3.** Copolymer nach Anspruch 1 oder 2, wobei $R^1$ NH, S oder O ist.

**4.** Copolymer nach einem der Ansprüche 1 bis 3, wobei $R^2$ bis $R^9$ aus H, OH, $C_1$-$C_4$-Alkyl, $C_1$-$C_4$-Alkoxy oder $C_1$-$C_8$-Alkoxyalkyl unabhängig ausgewählt sind.

**5.** Copolymer nach Anspruch 4, wobei $R^2$ bis $R^9$ aus H oder $C_1$-$C_4$-Alkyl unabhängig ausgewählt sind.

**6.** Copolymer nach einem der Ansprüche 1 bis 5, wobei jedes R' aus H, $C_1$-$C_4$-Alkyl oder $C_6$-Aryl unabhängig ausgewählt ist.

**7.** Copolymer nach Anspruch 1 oder 2, wobei Teil a) mindestens ein Monomer umfasst, das aus der Gruppe ausgewählt ist, bestehend aus: 9-Oxo-3-(propan-2-yl)-9H-thioxanthen-2-ylpropen-2-oat; und N-Ethyl-N-[(9-oxo-9H-thioxanthen-3-yl)methyl]prop-2-enamid.

**8.** Copolymer nach einem der Ansprüche 1 bis 7, umfassend, basierend auf dem Gesamtgewicht des Teils b):

80 bis 99 Gew.-% bs) des mindestens einen ethylenisch ungesättigten Monomers, das, falls homopolymerisiert, ein Homopolymer ergeben würde, das eine Glasübergangstemperatur (Tg) von weniger als 25 °C aufweist; und
1 bis 20 Gew.-% bh) mindestens eines ethylenisch ungesättigten Monomers, das, falls homopolymerisiert, ein Homopolymer ergeben würde, das eine Glasübergangstemperatur (Tg) von mehr als 25 °C aufweist.

**9.** Copolymer nach Anspruch 8, umfassend, basierend auf dem Gesamtgewicht des Teils b):

80 bis 99 Gew.-%, vorzugsweise 85 bis 99 Gew.-% und stärker bevorzugt 85 bis 95 Gew.-%, bs) mindestens eines ethylenisch ungesättigten Monomers, das, falls homopolymerisiert, ein Homopolymer ergeben würde, das eine Glasübergangstemperatur (Tg) von weniger als 20 °C aufweist; und
1 bis 20 Gew.-%, vorzugsweise 1 bis 15 Gew.-% und stärker bevorzugt 5 bis 15 Gew.-%, bh) mindestens eines ethylenisch ungesättigten Monomers, das, falls homopolymerisiert, ein Homopolymer ergeben würde, das eine Glasübergangstemperatur (Tg) von mehr als 30 °C aufweist.

**10.** Copolymer nach einem der Ansprüche 1 bis 9, wobei Teil b) 0,1 bis 5 Gew.-%, vorzugsweise 0,1 bis 2 Gew.-%, basierend auf dem Gesamtgewicht der Monomere, b) iv) mindestens eines tertiären Amino(meth)acrylats umfasst.

**11.** Material, das unter Photobestrahlung vernetzbar ist, das Material umfassend ein, oder bestehend aus einem, Copolymer, das wie in einem der Ansprüche 1 bis 10 definiert ist.

**12.** Reaktive Heißschmelzezusammensetzung, die unter Photobestrahlung vernetzbar ist, die Zusammensetzung umfassend, basierend auf dem Gewicht der Zusammensetzung:

20 bis 100 Gew.-% i) mindestens eines wie einem der Ansprüche 1 bis 10 definierten Copolymers;
0 bis 60 Gew.-% ii) mindestens eines Klebrigharzes; und
0 bis 20 Gew.-% iii) Wachs.

**13.** Beschichtung, Klebstoff oder Dichtungsmaterial, die/der/das durch die wie in Anspruch 12 definierte Vernetzung unter Photobestrahlung der reaktiven Heißschmelzezusammensetzung erhalten wird.

**14.** Heißschmelzehaftklebstoff (HMPSA), der durch die wie in Anspruch 12 definierte Vernetzung unter Photobestrahlung der reaktiven Heißschmelzezusammensetzung erhalten wird.

**15.** Erzeugnis (A), umfassend einen härtbaren Film der wie in Anspruch 12 definierten reaktiven Heißschmelzezusammensetzung, wobei der Film auf einer Trennlage und/oder einem Trägersubstrat angeordnet ist.

**16.** Erzeugnis (A) nach Anspruch 15, das ein Etikett, ein einseitiges Klebeband, ein Transferklebeband oder ein doppelseitiges Klebeband ist.

**Revendications**

**1.** Copolymère obtenu par polymérisation par radicaux libres, ledit copolymère comprenant, sur la base du poids total de monomères :

de 0,1 à 10 % en poids de a) au moins un photoinitiateur co-polymérisable selon la Formule (I) :

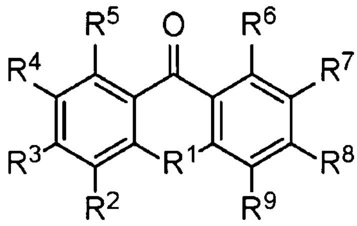

(I)

dans laquelle : $R^1$ est NH, $CH_2$, S ou O ;
$R^2$ à $R^9$ sont indépendamment choisis parmi H, OH, SH, halogénure, CN, un alkyle en $C_1$ à $C_6$, un alcoxy en $C_1$ à $C_6$, un alcoxyalkyle en $C_1$ à $C_{12}$, COOH, $SR^{10}$, $COOR^{10}$, $N(R^{10})_2$ ou $N(R^{10})_3Q$ ;
chaque $R^{10}$ est indépendamment choisi parmi un alkyle en $C_1$ à $C_6$ ou un aryle en $C_6$ à $C_{18}$ ; et,
Q est halogénure, acétate, phosphate, sulfate ou nitrate,
à condition que j des radicaux $R^2$ à $R^9$ soit un radical choisi parmi

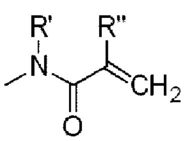 , 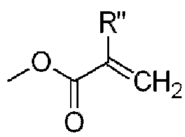 , 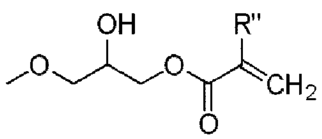 ,

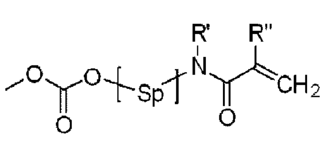 , 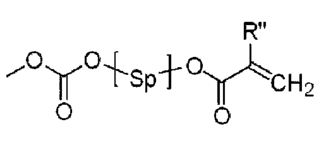 ou, 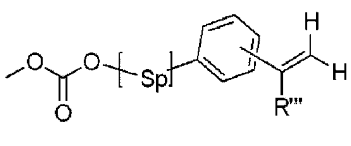

dans laquelle : j est un entier de 1 à 3, de préférence 1 ou 2 ;

chaque R' est indépendamment choisi parmi H, un alkyle en $C_1$ à $C_4$ ou un aryle en $C_6$ à $C_{18}$ ;
R" représente H ou un alkyle en $C_1$ ;
R‴ représente H ou un alkyle en $C_1$ ; et,
Sp désigne un groupe d'espacement du type suivant :

$$-[-\{(X)_k-Y\}_l-(X)_m-]- \text{ ou } -[-\{(X)_k-Y\}_l-\{(X)_m-Y\}_n]-$$

dans laquelle : k est un nombre entier allant de 1 à 10 ;
l est un nombre entier allant de 0 à 25 ;
m est un nombre entier allant de 1 à 10 ;
n est un nombre entier allant de 0 à 25 ;
chaque X est choisi indépendamment parmi un alkylène en $C_2$ à $C_{12}$, un cycloalkylène en $C_3$ à $C_{18}$ ou un arylène en $C_6$ à $C_{18}$ ; et,
chaque Y est un radical divalent choisi indépendamment dans le groupe constitué de :

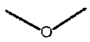 , 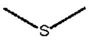 , 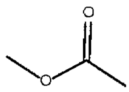 , 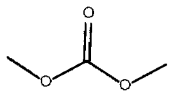 , 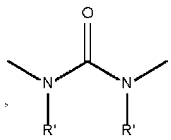 , 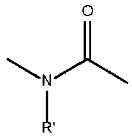 , 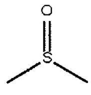 et 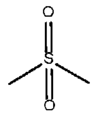 ;

et,
de 90 à 99,9 % en poids de b) au moins un monomère non ionique à insaturation éthylénique qui ne porte pas de groupe époxyde ou de fraction décomposable sous photo-irradiation pour former un radical, dans laquelle la partie b) comprend de 0,1 à 2 % en poids, sur la base du poids total de monomères, de b) vinylméthyloxazolidinone (VMOX).

2. Copolymère selon la revendication 1, comprenant, sur la base du poids total de monomères :

de 0,1 à 5 % en poids, de préférence de 0,1 à 2 % en poids a) dudit au moins un photoinitiateur copolymérisable conformément à la Formule (I) ; et,
de 95 et 99,9 % en poids, de préférence de 98 et 99,9 % en poids b) dudit au moins un monomère non ionique à insaturation éthylénique qui ne porte pas de groupe époxyde ou de fraction décomposable par photo-irradiation pour former un radical.

3. Copolymère selon la revendication 1 ou la revendication 2, dans lequel $R^1$ est NH, S or O.

4. Copolymère selon l'une quelconque des revendications 1 à 3, dans lequel $R^2$ à $R^9$ sont indépendamment choisis parmi H, OH, un alkyle en $C_1$ à $C_4$, un alcoxy en $C_1$ à $C_4$ ou un alcoxyalkyle en $C_1$ à $C_8$.

5. Copolymère selon la revendication 4, dans lequel $R^2$ à $R^9$ sont indépendamment choisis parmi H ou un alkyle en $C_1$ à $C_4$.

6. Copolymère selon l'une quelconque des revendications 1 à 5, dans lequel chaque R' est choisi indépendamment parmi H, un alkyle en $C_1$ à $C_4$ ou un aryle en $C_6$.

7. Copolymère selon la revendication 1 ou la revendication 2, dans lequel la partie a) comprend au moins un monomère choisi dans le groupe constitué de : 9-oxo-3-(propan-2-yl)-9H-thioxanthène-2-yle propen-2-oate ; et, N-éthyl-N-[(9-oxo-9H-thioxanth-3-yl)méthyl]prop-2-énamide.

8. Copolymère selon l'une quelconque des revendications 1 à 7, comprenant, sur la base du poids total de ladite partie b) :

de 80 à 99 % en poids de bs) au moins un monomère à insaturation éthylénique qui, s'il était homopolymérisé, donnerait un homopolymère ayant une température de transition vitreuse (Tg) inférieure à 25 °C ; et,
de 1 à 20 % en poids de bh) au moins un monomère à insaturation éthylénique qui, s'il était homopolymérisé, donnerait un homopolymère ayant une température de transition vitreuse (Tg) supérieure à 25 °C.

9. Copolymère selon la revendication 8, comprenant, sur la base du poids total de ladite partie b) :

de 80 à 99 % en poids, de préférence de 85 à 99 % en poids et plus préférablement de 85 à 95 % en poids de bs) au moins un monomère à insaturation éthylénique qui, s'il était homopolymérisé, donnerait un homopolymère ayant une température de transition vitreuse (Tg) inférieure à 20 °C ; et,
de 1 à 20 % en poids, de préférence de 1 à 15 % en poids et plus préférablement de 5 à 15 % en poids de bh) au moins un monomère à insaturation éthylénique qui, s'il était homopolymérisé, donnerait un homopolymère ayant une température de transition vitreuse (Tg) supérieure à 30 °C.

**10.** Copolymère selon l'une quelconque des revendications 1 à 9, dans lequel la partie b) comprend de 0,1 à 5 % en poids, de préférence de 0,1 à 2 % en poids, sur la base du poids total de monomères, de b) iv) au moins un (méth)acrylate d'amino tertiaire.

**11.** Matériau qui est réticulable sous photoirradiation, ledit matériau comprenant ou étant constitué d'un copolymère selon l'une quelconque des revendications 1 à 10.

**12.** Composition thermofusible réactive qui est réticulable sous photoirradiation, ladite composition comprenant, sur la base du poids de la composition :

de 20 à 100 % en poids i) d'au moins un copolymère selon l'une quelconque des revendications 1 à 10 ;
de 0 à 60 % en poids ii) d'au moins une résine tackifiante ; et,
de 0 à 20 % en poids de iii) cire.

**13.** Revêtement, adhésif ou produit d'étanchéité obtenu par la réticulation sous photoirradiation de la composition thermofusible réactive telle que définie dans la revendication 12.

**14.** Adhésif thermofusible sensible à la pression (HMPSA) obtenu par la réticulation sous photoirradiation de la composition thermofusible réactive telle que définie dans la revendication 12.

**15.** Article (A) comprenant un film durcissable de la composition thermofusible réactive telle que définie dans la revendication 12, ledit film étant disposé sur une feuille anti-adhésive et/ou un substrat porteur.

**16.** Article (A) selon la revendication 15 qui est une étiquette, un ruban simple face, un ruban de transfert ou un ruban double face.

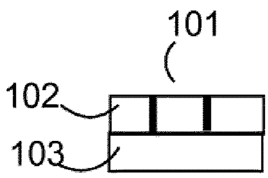

Figure 1

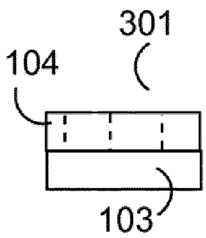

Figure 3

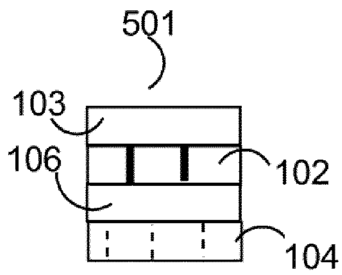

Figure 5

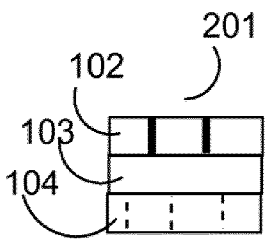

Figure 2

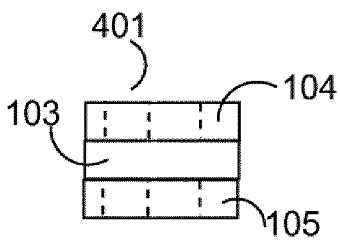

Figure 4

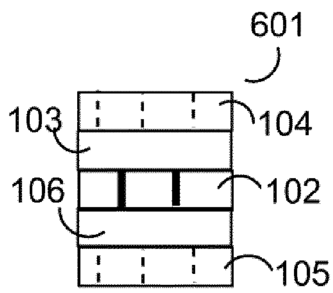

Figure 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 3661618 A
- EP 3252088 A1
- EP 2960258 A1
- WO 2021225778 A1
- EP 1469036 B1
- EP 0017364 A
- US 4144157 A
- US 2006142408 A1
- US 3419512 A
- US 3479246 A
- US 5605999 A
- EP 0520426 B1